(19) **Europäisches Patentamt / European Patent Office / Office européen des brevets**

(11) **EP 4 371 066 B1**

(12) # EUROPEAN PATENT SPECIFICATION

(45) Date of publication and mention
of the grant of the patent:
**06.05.2026 Bulletin 2026/19**

(21) Application number: **22887510.0**

(22) Date of filing: **21.10.2022**

(51) International Patent Classification (IPC):
**G06T 7/11** (2017.01)   **G06T 7/40** (2017.01)
**G06T 3/40** (2024.01)   **G06T 7/70** (2017.01)
**G06V 40/16** (2022.01)   **G06T 5/60** (2024.01)
**G06T 5/77** (2024.01)   **G06V 10/70** (2022.01)

(52) Cooperative Patent Classification (CPC):
**G06V 10/50; G06T 5/60; G06T 5/77; G06T 7/40;
G06V 10/454; G06V 10/54; G06V 10/771;
G06V 10/7715; G06V 10/806; G06V 10/82;
G06V 10/993; G06V 20/70; G06V 40/16;
G06V 40/168; G06T 2207/20084;**     (Cont.)

(86) International application number:
**PCT/KR2022/016169**

(87) International publication number:
**WO 2023/075314 (04.05.2023 Gazette 2023/18)**

(54) **IMAGE PROCESSING METHOD, DEVICE, ELECTRONIC APPARATUS AND STORAGE MEDIUM**

BILDVERARBEITUNGSVERFAHREN, VORRICHTUNG, ELEKTRONISCHE VORRICHTUNG UND SPEICHERMEDIUM

PROCÉDÉ DE TRAITEMENT D'IMAGE, DISPOSITIF, APPAREIL ÉLECTRONIQUE ET SUPPORT DE STOCKAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.10.2021   CN 202111260449**

(43) Date of publication of application:
**22.05.2024 Bulletin 2024/21**

(73) Proprietor: **Samsung Electronics Co., Ltd.
Suwon-si, Gyeonggi-do 16677 (KR)**

(72) Inventors:
• **ZHANG, Jianxing**
**Gyeonggi-do 16677 (KR)**
• **LIU, Zikun**
**Gyeonggi-do 16677 (KR)**
• **XIE, Zheng**
**Gyeonggi-do 16677 (KR)**
• **YANG, Jian**
**Gyeonggi-do 16677 (KR)**

• **CHUN, Hyungju**
**Gyeonggi-do 16677 (KR)**
• **WEN, Wei**
**Gyeonggi-do 16677 (KR)**

(74) Representative: **Gulde & Partner
Patent- und Rechtsanwaltskanzlei mbB
Berliner Freiheit 2
10785 Berlin (DE)**

(56) References cited:
CN-A- 112 990 053     KR-A- 20210 109 719
US-A1- 2018 365 794     US-A1- 2021 104 015
US-A1- 2021 319 243     US-A1- 2021 327 076

• KIM TAEOH ET AL: "Block-Attentive Subpixel Prediction Networks for Computationally Efficient Image Restoration", IEEE ACCESS, IEEE, USA, vol. 9, 24 June 2021 (2021-06-24), pages 90881 - 90895, XP011863713, DOI: 10.1109/ ACCESS.2021.3091975

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

• QI QI ET AL: "Underwater Image Co-Enhancement With Correlation Feature Matching and Joint Learning", IEEE TRANSACTIONS ON CIRCUITS AND SYSTEMS FOR VIDEO TECHNOLOGY, IEEE, USA, vol. 32, no. 3, 20 April 2021 (2021-04-20), pages 1133 - 1147, XP011902132, ISSN: 1051-8215, [retrieved on 20220307], DOI: 10.1109/TCSVT.2021.3074197

(52) Cooperative Patent Classification (CPC): (Cont.)
G06T 2207/30201

## Description

[Technical Field]

The disclosure relates to an artificial intelligent field, and more particularly to an image processing method and device, an electronic apparatus and a storage medium.

[Background Art]

The camera function of an intelligent terminal, for example a smart phone, is an important function. With the popularity and changing frequency of the intelligent terminal, the camera function of the intelligent terminal is more and more powerful, the image resolution is larger and larger, and the imaging details are clearer and clearer.

The image is an objective reflection of the real world, and the imaging quality is a core index to evaluate the camera function. Therefore, improving the image imaging quality has become an important goal pursued by many manufacturers.

However, due to the limited physical structure of the intelligent terminal, there is still a certain gap between the imaging quality of the intelligent terminal and the professional camera. Especially under a dark light condition, due to insufficient illumination, the image photographed by the intelligent terminal will also have serious quality degradation (e.g., texture loss), especially for the portrait part in the image, and the serious quality degradation will greatly affect the usage experience of a user.

In some related art solutions, a certain preset filtering operator may be used to achieve the enhancement of the image texture. However, the recovering effect for texture details is poor if only the filtering is used to improve the image quality degradation, thus, the improvement of the image quality is very limited. In view of this, a better technology for improving or correcting the image quality degradation is needed.

Conventional image processing methods and devices including using artificial intelligence models are disclosed in KIM TAEOH ET AL: "Block-Attentive Subpixel Prediction Networks for Computationally Efficient Image Restoration", IEEE ACCESS, IEEE, USA, vol. 9, 24 June 2021 (2021-06-24), pages 90881-90895; CN 112 990 053 A and 01 01 ET AL: "Underwater Image Co-Enhancement With Correlation Feature Matching and Joint Learning", IEEE TRANSACTIONS ON CIRCUITS AND SYSTEMS FOR VIDEO TECHNOLOGY, IEEE, USA, vol. 32, no. 3, 20 April 2021 (2021-04-20), pages 1133-1147.

[Disclosure]

[Technical Solution]

The invention is defined by the appended claims. The description that follows is subjected to this limitation. Any disclosure lying outside the scope of said claims is only intended for illustrative as well as comparative purposes.

The technical solutions provided by the embodiments of the present disclosure at least bring the following advantageous effects: according to the image processing method and device of the embodiment of the present disclosure, by rearranging feature blocks in the feature map in a feature space, and obtaining an output image after the target area is processed based on the rearranged feature blocks and the feature map, so that: as for a large area of texture missing areas in the target area, details thereof may be effectively restored, thereby improving the image quality degradation better.

It should be understood that the above general description and the following detailed description are only exemplary and explanatory, and may not limit the present disclosure.

[Description of Drawings]

The drawings herein are incorporated into the specification and constitute a part of the specification, show example embodiments conforming to the present disclosure, and together with the specification to explain the principle of the present disclosure, and do not constitute an improper limitation of the present disclosure.

The above and other aspects, features, and advantages of certain embodiments of the present disclosure will be more apparent from the following description taken in conjunction with the accompanying drawings, in which:

FIG. 1 is a flowchart of an image processing method according to an embodiment;
FIG. 2 is a schematic diagram showing spatial rearrangement of feature blocks, according to an embodiment;
FIG. 3 is a schematic diagram showing enlarging a receptive field through rearrangement of the feature blocks, according to an embodiment;
FIG. 4 is a schematic diagram showing operations of processing of a target area according to an embodiment;

FIG. 5 is a schematic diagram showing a procedure and principle of the processing of the target area according to an embodiment;

FIG. 6 is a schematic diagram of operations of an image processing method according to an embodiment;

FIG. 7 is a schematic diagram of a texture direction field according to another embodiment;

FIG. 8 is a schematic diagram showing texture direction field information is used for guiding texture generation;

FIG. 9 is a schematic diagram of a texture trend extraction operation;

FIGs. 10A-10B are schematic diagrams showing enhancement and propagation of a direction field;

FIG. 11 is a schematic diagram showing a structure of a machine learning model according to an embodiment;

FIG. 12 is a schematic diagram further showing a specific structure of the machine learning model according to an embodiment;

FIG. 13 is a schematic diagram of operations of a semantic encoding branch according to an embodiment;

FIG. 14 is a schematic diagram showing rotation invariance of obtained relative semantic layout information according to an embodiment;

FIG. 15 is a schematic diagram showing the semantic layout information according to an embodiment;

FIG. 16 is a schematic diagram of operations of a quality degradation estimation branch according to an embodiment;

FIG. 17 is a flowchart showing an image processing method according to another example embodiment;

FIG. 18 is a flowchart showing an image processing method according to a further embodiment;

FIG. 19 is a block diagram showing an image processing device according to an embodiment;

FIG. 20 is a block diagram showing an image processing device according to another embodiment;

FIG. 21 is a block diagram showing an image processing device according to a further embodiment; and

FIG. 22 is a block diagram of an electronic apparatus according to an embodiment.

[Mode for Invention]

In order to enable ordinary people in the art to better understand the technical solutions of the present disclosure, the technical solutions in the embodiments of the present disclosure will be clearly and completely described below in combination with the drawings.

It should be noted that the terms "first" and "second" in the specification and claims of the present disclosure and the above drawings are used to distinguish similar objects, and not necessarily used to describe a specific order or sequence. It should be understood that data used in this way may be interchanged under appropriate circumstances so that the embodiments of the present disclosure described herein may be implemented in an order other than those illustrated or described herein. The implementations described in the following embodiments do not represent all implementations consistent with the present disclosure. On the contrary, they are merely examples of devices and methods consistent with some aspects of the present disclosure as detailed in the appended claims.

It should be noted here that "at least one of several items" appearing in the present disclosure all means including the three parallel cases: "any one of the several items", "a combination of any multiple of the several items", and "the entirety of the several items". For example, "including at least one of A and B" is including the following three parallel cases: (1) including A; (2) including B; and (3) including A and B. For another example, "executing at least one of Step 1 and Step 2" indicates the following three parallel cases: (1) executing Step 1; (2) executing Step 2; and (3) executing Step 1 and Step 2.

As is traditional in the field, the embodiments are described, and illustrated in the drawings, in terms of functional blocks, units and/or modules. Those skilled in the art will appreciate that these blocks, units and/or modules are physically implemented by electronic (or optical) circuits such as logic circuits, discrete components, microprocessors, hard-wired circuits, memory elements, wiring connections, and the like, which may be formed using semiconductor-based fabrication techniques or other manufacturing technologies. In the case of the blocks, units and/or modules being implemented by microprocessors or similar, they may be programmed using software (e.g., microcode) to perform various functions discussed herein and may optionally be driven by firmware and/or software. Alternatively, each block, unit and/or module may be implemented by dedicated hardware, or as a combination of dedicated hardware to perform some functions and a processor (e.g., one or more programmed microprocessors and associated circuitry) to perform other functions. Also, each block, unit and/or module of the embodiments may be physically separated into two or more interacting and discrete blocks, units and/or modules without departing from the present scope. Further, the blocks, units and/or modules of the embodiments may be physically combined into more complex blocks, units and/or modules without departing from the present scope.

Throughout the Specification, the use of the terms "solve" or "solution" or similar terms with respect to one or more problems or issues may encompass a full or complete solution to the problem or issue, and may also encompass partial or incremental solutions to the problem or issue, and/or solutions which address or mitigate some or all of the effects of the problem or issue.

As discussed above, the recovering effect for texture details may be poor if only the filtering is used to improve the image quality degradation, thus, the improvement to the image quality is very limited.

The performance effect of the related art solutions on the real quality-degraded image is not ideal, mainly due to the following three problems:

Problem 1: For a large area of texture missing, the details may not be recovered.

In a low light condition, large area of texture missing is very common. Although implicit semantic features may be extracted, if there is a large area of texture missing, suffering from a limited receptive field of convolution, these extracted features have little effect on guiding subsequent texture generation. For example, for a hair area in which there is a large area of texture missing, after being processed using related art solutions, there is still the texture missing.

Problem 2: The generated texture is unreasonable.

The related art solutions may not extract explicit semantic information, especially the spatial layout information, which may also be called semantic layout, and which may relate to the locations of eyes, hair, and so on. This information is very important for texture generation, and thus the unreasonable texture may be generated without guidance of such prior information. For example, due to lacking the guidance of the semantic layout, the hair may be generated on the face, which is very undesirable.

Problem 3: The lack of the prior information on the image quality degradation leads to over-processing for the target area.

The degradation degrees of input images vary from light to heavy. Generally, the degree of the image quality degradation is lighter in the case of a sufficient light condition during the day, and heavier in the case of an insufficient light condition at night. Even in different areas of a same image, the degrees of quality degradation may be different. However, the related art solutions may lack a judgment for the image quality degradation information, may adopt a unified processing force for all images, and may adopt a unified processing force for all areas of one image, thus, the problem of the over-processing is very easy to occur. For example, due to the lack of the judgment for the image quality degradation, the detailed texture on the skin may be excessively processed.

After the above problems in the existing facial processing technology are discovered, the present disclosure firstly proposes an image processing method to solve Problem 1 discussed above, which may effectively solve the problem existing in the current facial processing technology that the details may not be repaired for a large area of texture missing areas. Secondly, on this basis, the present disclosure proposes an image processing method that may further solve Problem 2 and Problem 3 discussed above.

Embodiments relating to a target area processing solution may be applied to a night shooting mode of taking pictures by the intelligent terminal. For example, when the user selects the night shooting mode of the intelligent terminal to take pictures at night or under a scene such as insufficient indoor light, the camera of the intelligent terminal will automatically detect the person in the image, and automatically improve the quality of the face area, for example including hair, so that the user may capture high-quality face details. As an example, the image processing method that will be described below may either process all the captured images or process the image on a preview interface. Further, since the above problem usually occurs when the light is insufficient, the image processing method described below may be applied to the night shooting mode of the intelligent terminal, for example.

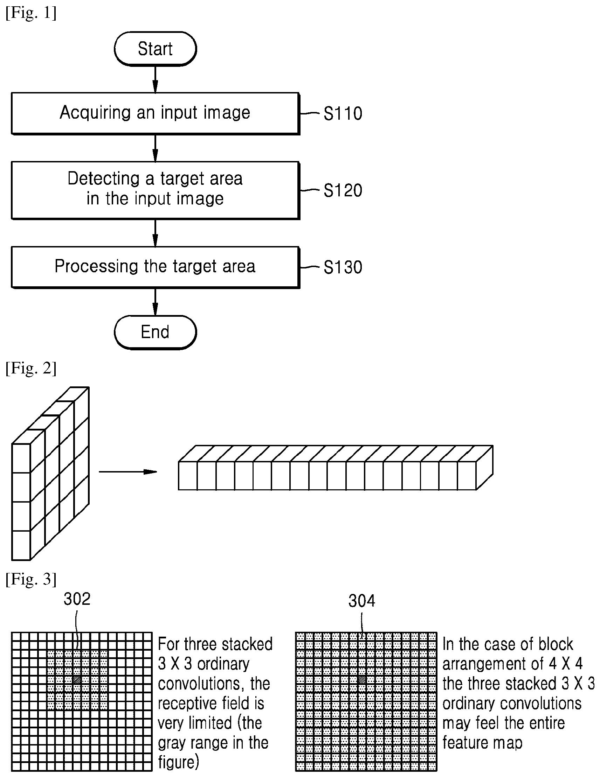

Hereinafter, an image processing method according to various exemplary embodiments of the present disclosure will be described with reference to FIG. 1 to FIG. 19.

Embodiments relating to the image processing method shown in FIG. 1 may relate to solutions to the problem "for a large area of texture missing, the details may not be recovered" as discussed above.

FIG. 1 is a flowchart of an image processing method according to an exemplary embodiment of the present disclosure.

Referring to FIG. 1, at step S110, an input image is acquired. For example, the input image may be acquired in response to an instruction of a user (e.g., an instruction of the user generated through a touch input). Acquiring the input image either may include acquiring an image in real time through a direct shooting, and may also include acquiring a pre-stored image. The present disclosure does not limit the method of acquiring the input image.

At step S120, a target area in the input image is detected. Here, any known target area detection method may be used to detect the target area in the input image, and the present disclosure is not limited thereto either. As an example, the target area may be a face area, but is not limited to this.

At step S130, the target area is processed. For example, the processing of the target area may include: obtaining a feature map of the target area, rearranging feature blocks in the feature map in a feature space, and obtaining an output image after the target area is processed based on the rearranged feature blocks and the feature map. As an example, the obtaining of the output image after the target area is processed based on the rearranged feature blocks and the feature map may include: weighting and combining the rearranged feature blocks, and obtaining the output image after the target area is processed based on the weighted and combined feature blocks and the feature map. As an example, a machine learning model may be used to process the target area. In addition, the processing of the target area may include recovering and generating of details, in which for example a finer texture is interpolated at a place where the texture is blurred, and a semantically reasonable, real and natural texture is generated at a place where there is no texture, may include reducing image noise, and may include eliminating blur to make the image clear, and the like.

As an example, when the target area is a face area, processing the target area may include redrawing the face area. "Face redrawing" technology is an important branch of the image quality enhancement technology, also called "face restoration" or "face hallucination", which may be a technology specially aimed at improving the image quality of the face area, and such an improvement may include but is not limited to the recovering and generating of details in a finer texture is interpolated at a place where the texture is blurred, and a semantically reasonable, and a real and natural texture is generated at a place where there is no texture, reducing image noise, and eliminating blur to make the image clear, and the like. In embodiments, there may be differences between the face redrawing technology and the "beauty" function in many intelligent terminals: firstly, the purposes may be different. The purpose of the beauty function may be to make the face more "good-looking", with more subjective factors; while the face redrawing may be used to recover the real and natural facial details, which is dominated by objective factors. Secondly, the means may be different. The beauty function may improve the visual effect by changing the characteristics of the face, such as changing the shape of the face to obtain the effect of "bigger eyes" or "thinner face"; while the face redrawing may generate high-frequency detail information by interpolating in the existing texture prior information, or by learning massive high-definition facial prior knowledge, to generate semantically reasonable and real and natural texture details in untextured areas. Third, the ranges may be different. The beauty function usually only relates to the face area, and generally does not deal with the hair, while the face redrawing may improve the entire head feature including the hair.

Hereinafter, examples of step S130 will be described in detail. Firstly, at step S130, for example, the feature map of the target area may be obtained by extracting an image feature of the target area. Here, the image feature may be a texture feature, a shadow feature, a tone feature, an illumination feature, or a color feature, but it is not limited thereto. The present disclosure does not limit the specific feature extraction method. In addition, a deep neural network may be used to extract the image features of the target area to obtain feature maps of different scales.

Next, the feature blocks in the feature map are rearranged in the feature space. FIG. 2 is a schematic diagram showing spatial rearrangement of feature blocks. As shown in FIG. 2, the feature map may be discretized into feature blocks at first, and then the feature blocks may be rearranged in the feature space. Specifically, the feature maps are discretized into feature blocks of the same size, and arranged along the channel dimension according to a preset arrangement rule (e.g., row first, column second). The purpose of spatial rearrangement may be to expand the receptive field of convolution, so that each spatial location feature may feel the entire feature map.

FIG. 3 is a schematic diagram showing enlarging the receptive field through the rearrangement of the feature blocks. As shown in FIG. 3, the receptive field of three stacked 3X3 ordinary convolutions is very limited, for example corresponding to the grey shaded range 302, but if the feature map is rearranged according to 4X4, the three stacked 3X3 ordinary convolutions may feel the entire feature map, for example corresponding to the grey shaded range 304, thereby providing the possibility for long-range and/or long-distance reuse of features.

Subsequently, for example, the importance of at least one rearranged feature block and/or the correlation between different feature blocks may be determined, and based on the importance of the at least one rearranged feature block and/or the correlation between different feature blocks, the rearranged feature blocks are weighted and combined. In embodiments, the importance may be expressed as, for example, a level of importance. In embodiments, this importance or level or importance may include an importance or level of importance of the at least one rearranged feature block with respect to, in comparison with, or relative to one or more other rearranged feature blocks. Specifically, the importance of at least one arranged feature block may be analyzed first to determine a weight of each feature block in the at least one feature block. For example, an operation similar to a channel attention mechanism may be used to weight different feature blocks. However, the method of determining the importance of each feature block and then determining its weight is not limited thereto. Next, the correlation between different feature blocks may be calculated. For example, the correlation between different feature blocks may be calculated according to the similarity of texture features. However, the method of calculating the correlation between the feature blocks is not limited thereto. Finally, the rearranged feature blocks may be weighted and combined according to the determined weight of each feature block and/or the calculated correlation between the feature blocks. Although various methods may be adopted to determine the importance of each feature block and the correlation between different feature blocks, how to determine the importance of the at least one rearranged feature block and/or the correlation between different feature blocks better will directly affect the weighting and combing of the rearranged feature blocks, thereby affecting the improving level for the image quality.

After the weighting and combing, the output image after the target area is processed may be obtained based on the weighted and combined feature blocks and the feature map. For example, firstly, a reconstruction feature map may be obtained by recovering the weighted and combined feature blocks to an initial position thereof in the feature map; secondly, the reconstruction feature map may be fused with the feature map; and finally, the output image after the target area is processed may be obtained based on the fused feature map. For example, after the fused feature map is further convoluted, the feature reuse of different spatial locations may be realized, so that the output image after the target area is processed may be obtained.

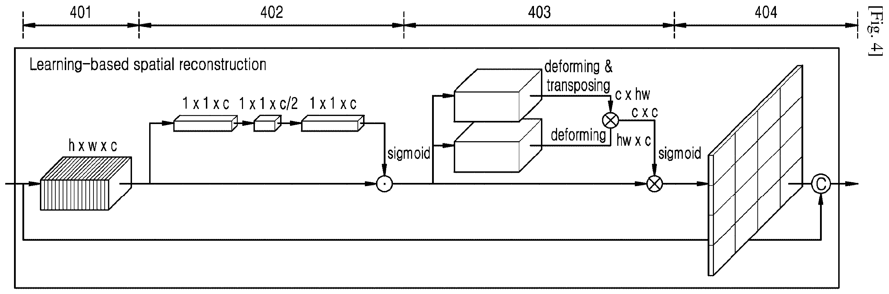

FIG. 4 is a schematic diagram showing operations of the processing of the target area according to an exemplary embodiment of the present disclosure. As shown in FIG. 4, after the feature map of the target area is obtained, firstly, operation 404 is executed. Operation 401 may include feature space rearrangement, for example, rearranging the feature map into the form of hXwXc, where h and w are the height and width of the feature block respectively, and c is the number of feature channels (which may also be referred to as the number of feature blocks). Then, operation 402 is executed. Operation 402 may include block feature enhancement, that is, weighting feature blocks, for example, the weight of each feature block may be determined after passing through 1X1Xc, 1X1Xc/2, and 1X1Xc convolution operations in sequence and an activation function sigmoid, using the channel attention mechanism . Subsequently, operation 403 is executed. Operation 403 may include combining the weighted feature blocks, for example, calculating the correlation between the feature blocks by deforming and transposing the weighted feature blocks, and combining the weighted feature blocks according to the correlation. Finally, operation 404 is executed Operation 404 may include feature reusing, that is, recovering features of the weighted and combined feature blocks to their original spatial locations, and fusing them with the original feature maps. The above four steps may also be called "learning-based spatial reconstruction (shuffle)".

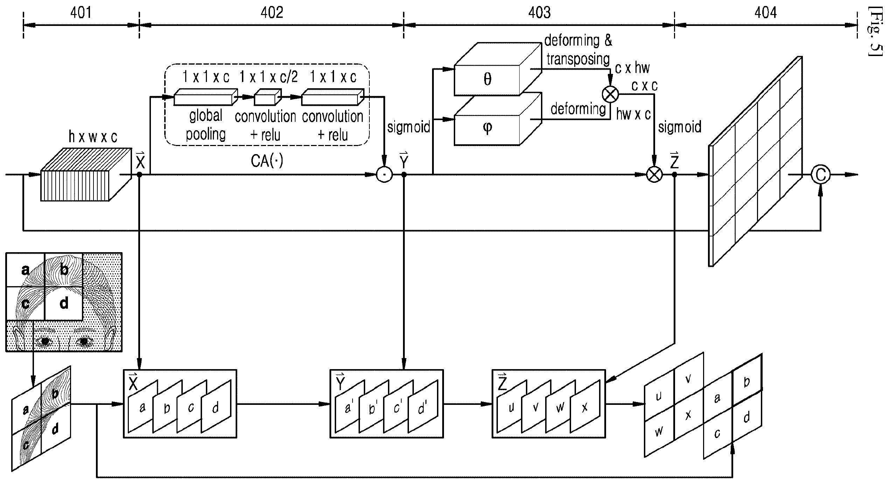

FIG. 5 is a schematic diagram showing a procedure and principle of the processing of the target area according to an exemplary embodiment of the present disclosure. In order to further explain the procedure and principle of the processing of the target area according to the exemplary embodiment of the present disclosure, it will be further introduced below with reference to a specific example of FIG. 5.

In embodiments, the feature block a in the obtained feature map of the target area may correspond to the hair on the upper left of the head in the target area, the feature block b may correspond to the hair on the upper right of the head (assuming that the texture missing occurs in this area), the feature block c may correspond to the hair and skin on the side face, and the feature block d may correspond to the skin. It should be noted that, in FIG. 5, the feature map is represented as an image for clarity, however, the actually input feature map may be different from the image shown in FIG. 5, and may for example be in a different form.

After the feature blocks in the feature map are rearranged, the obtained feature blocks may be represented using

. Next, the function CA(.) is used to determine the weight of the rearranged feature blocks, and the function CA(.) is implemented through an operation similar to the channel attention mechanism. Firstly, the global feature of each feature block is obtained through global pooling, and then the weight of each feature block is learned through a convolution layer (represented as "convolution+relu" in FIG. 5) and an activation function sigmoid, and is finally weighted to the feature block. This operation may pay more attention to the feature blocks having a larger amount of information and suppress unimportant feature blocks. For example, the weighted feature blocks a, b, c, and d may be represented as [a', b', c', d'] = [0.95a, 0.13b, 0.53c, 0.44d] , where 0.95a means that the feature block a is more important than other feature blocks, for example, it has a slight degradation level and a strong texture field. The above operation may be represented as Equation 1 below:

$$\vec{Y} = CA(\vec{X}) \odot \vec{X} \quad \text{(Equation 1)}$$

Subsequently, the weighted feature map may be represented as $\vec{Y}$. Though $\vec{Y}$ goes through the activation function sigmoid after going through two parallel convolutions (using different deformation operations) and cross multiplication, the correlation between the feature blocks may be learned. For example, the correlation between the feature blocks a, b, c, and d may be represented as the following matrix:

$$\begin{bmatrix} 0.825 & 0.531 & 0.221 & 0.081 \\ 0.615 & 0.923 & 0.085 & 0.092 \\ 0.249 & 0.509 & 0.745 & 0.075 \\ 0.025 & 0.023 & 0.277 & 0.739 \end{bmatrix}$$

The more similar the semantics of feature blocks, the higher the correlation, and vice versa. The information compensation between different feature blocks may be realized through a further cross multiplication with $\vec{Y}$. The above operation may be represented as Equation 2 below:

$$\vec{Z} = sigmoid\left(\theta(\overline{Y}) \otimes \varphi(\overline{Y})\right) \otimes \vec{Y} \qquad \text{(Equation 2)}$$

In Equation 2 above, $\theta(\overline{Y})$ and $\varphi(\overline{Y})$ may represent different convolution operations performed on $\overline{Y}$. Finally, the

obtained weighted and combined feature blocks may be represented as:

$$\begin{bmatrix} u \\ v \\ w \\ x \end{bmatrix} = \begin{bmatrix} 0.95a \\ 0.13b \\ 0.53c \\ 0.44d \end{bmatrix}^T \begin{bmatrix} 0.825 & 0.531 & 0.221 & 0.081 \\ 0.615 & 0.923 & 0.085 & 0.092 \\ 0.249 & 0.509 & 0.745 & 0.075 \\ 0.025 & 0.023 & 0.277 & 0.739 \end{bmatrix}$$

After calculation, the following may be obtained:

$$u = 0.784*a + 0.080*b + 0.132*c + 0.011*d$$
$$v = 0.504*a + 0.120*b + 0.270*c + 0.010*d$$
$$w = 0.210*a + 0.011*b + 0.395*c + 0.122*d$$
$$x = 0.077*a + 0.012*b + 0.040*c + 0.325*d$$

Wherein u, v, w and x are all weighted combinations of a, b, c and d. For example, v=0.504*a+0.120*b+0.27*c+0.01*d. The feature a has the highest weight, because it has the closest semantic relation (the top of the hair), good texture quality and rich texture details. The feature d has a weight close to 0, because it is the feature of the skin and has no semantic relation with the hair.

Finally, after the weighted and combined features u, v, w, and x are obtained, the weighted and combined feature blocks may be restored to their original locations in the feature map to obtain a reconstruction feature map, the reconstruction feature map is fused with the feature map, and the output image after the target area is processed is obtained based on the fused feature map. For example, features b and v may be spatially aligned and connected, thus, the feature b (with loss of details) may effectively reuse useful features in other locations, for example mainly a and c.

The image processing method according to the exemplary embodiment of the present disclosure has been described above in conjunction with FIG. 1 to FIG. 5, according to the above image processing method, by rearranging feature blocks in the feature map in a feature space, and obtaining an output image after the target area is processed based on the rearranged feature blocks and the feature map, so that for a large area of texture missing areas in the target area, details thereof may be effectively restored, so as to improve the image quality degradation better. Through the image processing method shown in FIG. 1, embodiments may relate to a solution to the problem "for a large area of texture missing, the details may not be recovered" in the related art solutions. An example of the image processing method may include: after the receptive field is expanded through the rearrangement of feature blocks, for a missing texture area in the target area, useful information is found from other areas (areas with useful texture information) to compensate for the missing texture area, thereby generating texture details in the texture missing area. Thus, how to find the useful information will affect improvement of the image quality.

As mentioned above, although various methods may be adopted to determine the importance of at least one feature block and/or the correlation between different feature blocks, how to determine the importance of at least one rearranged feature block and/or the correlation between different feature blocks better will directly affect the weighting and combing of the rearranged feature blocks, thereby affecting the improving level for the image quality. That is to say, how to find the useful information better or more accurately will affect the improvement of the image quality.

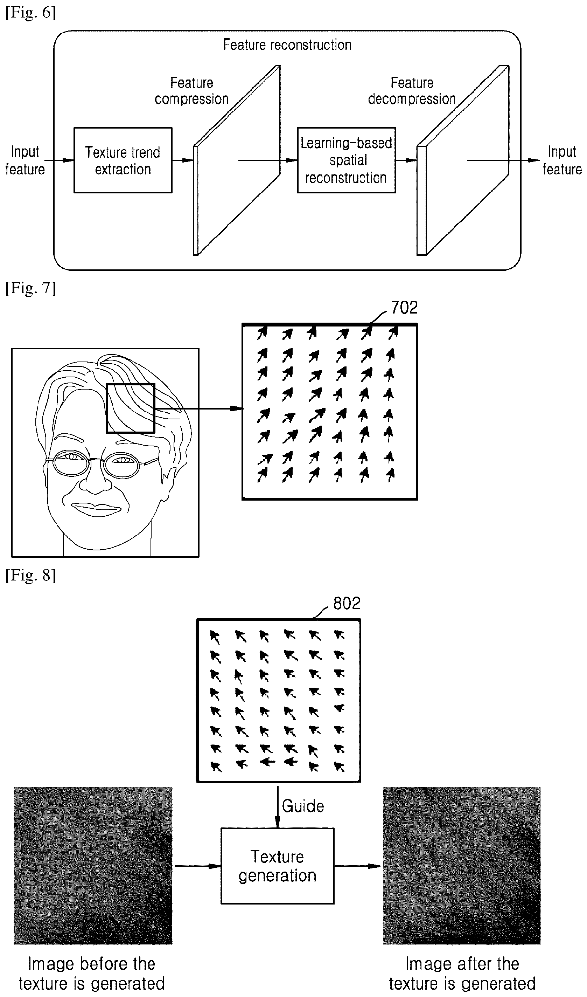

Therefore, according to another exemplary embodiment of the present disclosure, the importance of at least one feature block may be determined by performing the following operations: acquiring quality degradation level information and/or texture direction field information of at least one feature block of the feature map, and determining the importance of the at least one feature block, based on the quality degradation level information and/or the texture direction field information. For example, as shown in FIG. 6, before the feature blocks in the feature map are rearranged, the texture direction field information of the feature blocks may be acquired.

The texture direction field information extraction may also be called texture trend extraction. Here, the texture direction field information is used to determine the importance of the feature block and/or the correlation between different feature blocks. Specifically, the texture direction field information may include texture direction field strength information and texture direction field consistency information. The texture direction field strength information may be used to determine the importance of the feature blocks and the texture direction field consistency information may be used to determine the correlation between different feature blocks. In addition, the greater the strength of the texture direction field of the feature block, the higher the importance of the feature block, and the more consistent the texture direction field between the feature blocks, the higher the correlation between the feature blocks. The texture direction field information may be extracted to guide the processing of the target area because when the target area is a face area, the hair, eyebrows, beards and other hair parts in the target area have significant directional features, or the texture thereof has a certain trend, which is shown in FIG 7. For example, in FIG. 7, information about a texture direction field corresponding to the hair in the image of FIG. 7 may be represented as texture direction field information 702. Learning the trend of this kind of texture has an important guiding function in restoring and generating hair texture. Specifically, by using the texture direction field information when determining the importance of feature blocks and/or the correlation between feature blocks, it may be advantageous to weight and combine the feature blocks better, thereby facilitating generating more real and natural textures when the target area is processed. As shown in FIG. 8, the extracted texture direction field information 802 may be used to guide texture generation when the target area is processed, so that more real and natural texture details may be generated. For example, by predicting the texture direction field of facial parts having prominent directional features, such as hair and eyebrows, etc., the generated texture may be made to be more natural and in line with the features of the real texture, such as silky hair.

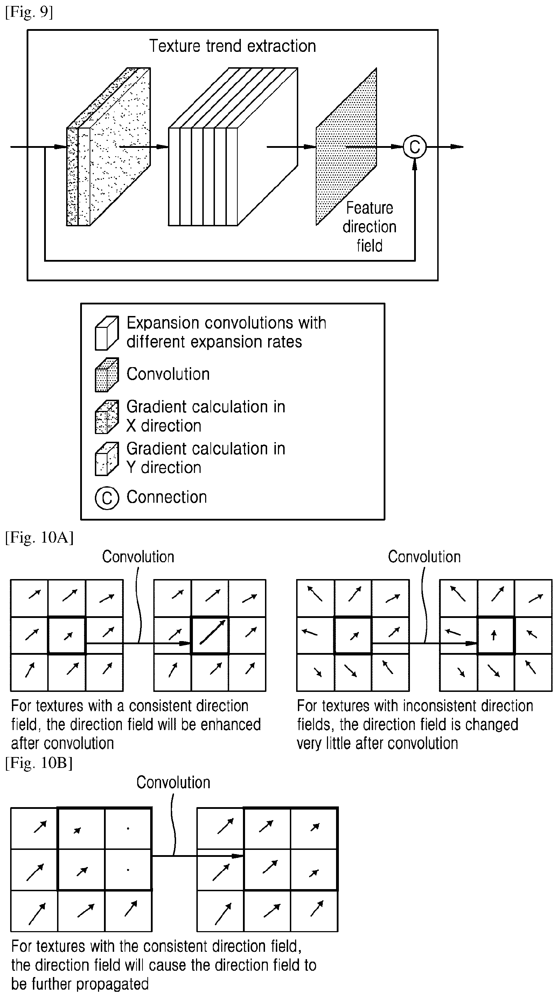

Hereinafter, the acquiring of the texture direction field information of at least one feature block will be discussed in conjunction with FIG. 9. Firstly, a gradient field corresponding to the at least one feature block in the feature map may be acquired. Specifically, as shown in FIG. 9, gradients of the input features in X and Y directions may be calculated respectively. Since the gradient field is perpendicular to the texture direction field, it reflects the directional features in the existing texture details, the extraction of the gradient field corresponds to the extraction of the texture direction field. Subsequently, as shown in FIG. 9, after the gradient field is acquired, the texture direction field consistency information and the texture direction field strength information may be obtained by applying expansion convolutions with different expansion rates to the gradient field. Expansion convolutions with different expansion rates being stacked may be used to calculate the consistency of the direction field and propagate the texture in the consistent direction. Specifically, stacking several expansion convolutions with different expansion rates may obtain a larger receptive field, thereby predicting a dense direction field. Its function may include two levels. The first level may be used to further enhance the consistency of the direction fields (as shown in FIG. 10A), and the second level may be used to realize the propagation of texture (as shown in FIG. 10B.

According to another exemplary embodiment, as shown in FIG. 6, in the image processing method shown in FIG. 1, after the texture direction field information of the feature blocks is extracted, the feature blocks may be compressed, correspondingly, the above mentioned rearranging of the feature blocks in the feature map in the feature space may include: rearranging the compressed feature blocks. In addition, after the learning-based spatial reconstruction, the features may be decompressed. As shown in FIG. 6, the texture trend extraction is specially designed to extract the texture direction field features of hair parts such as hair, eyebrows, and beards, and so on. Both the feature compression and decompression may use 1X1 convolution operations to realize redundant feature elimination and restoration, and the purpose of firstly performing feature compression, which may be referred to as elimination of redundant features, may be to improve the execution efficiency of the subsequent feature space rearrangement. The learning-based spatial reconstruction may relate to weighting and reconstructing the features of different spatial locations, so that the semantically similar features in different spatial locations may complement each other. FIG. 6 realizes the feature reconstruction of the target area as a whole.

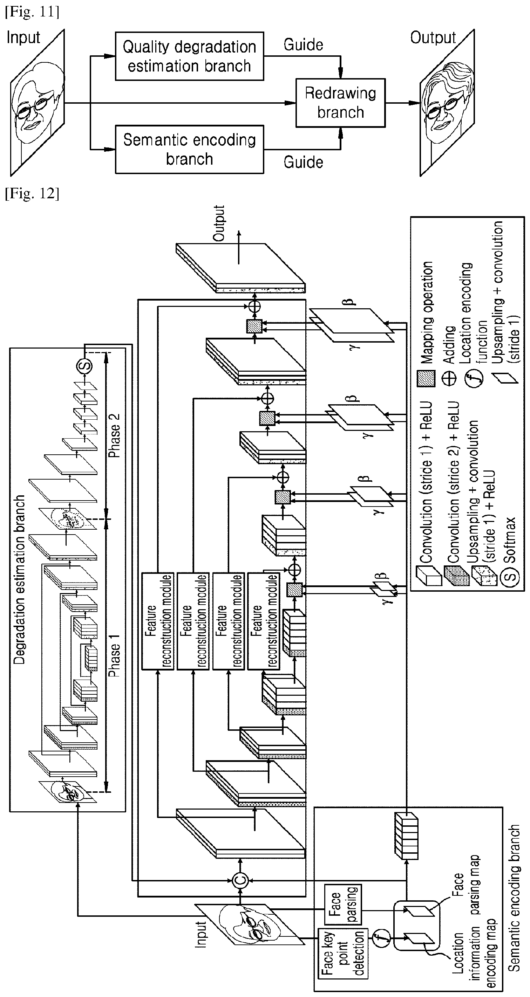

As an example, the above machine learning model may adopt a UNet-like structure, but unlike the standard UNet, a feature reconstruction module shown in FIG. 6 may be designed on skip connections of different scales in the machine learning model of the present disclosure, and an example of the specific network structure may be shown in the redrawing branch in FIG. 12. According to another exemplary embodiment of the present disclosure, the correlation between the rearranged different feature blocks may be determined by performing the following operations: acquiring semantic layout information of the target area and/or texture direction field information of at least one feature block of the feature map; and determining the correlation between different feature blocks, based on the semantic layout information and/or the texture direction field information. As described above, the texture direction field information may include the texture direction field consistency information. The texture direction field consistency information may be used to determine the correlation between different feature blocks. Generally, the more consistent the texture direction field between the feature blocks, the higher the correlation between the feature blocks. For convenience, duplicative description relating to obtaining the texture direction field information will not be repeated.

As mentioned above, in addition to extracting the texture direction field information to determine the importance and/or correlation of the feature blocks, the semantic layout information and/or the quality degradation level information may also be used for determining the importance and/or the correlation of the feature blocks. Hereafter, it will be described how to obtain the semantic layout information and the quality degradation level information.

As mentioned above, there are also the above Problem 2 and Problem 3 in the related art solutions, and with respect to the above Problem 2 and Problem 3, embodiments of the present disclosure proposes may relate to using the semantic layout information and/or the quality degradation level information to guide the processing of the target area, on the basis of the image processing method shown in FIG. 1. By using the semantic layout information to guide the processing of the target area, the texture generated during the processing of the target area (such as face processing) may be made to be more reasonable. By using the quality degradation level information to guide the processing of the target area, the over-processing of the target area may be effectively prevented.

To this end, the above machine learning model according to an exemplary embodiment of the present disclosure may include a semantic encoding branch and/or a quality degradation estimation branch in addition to a processing branch (hereinafter, also called a redrawing branch) for performing the above described processing of the target area.

FIG. 11 is a schematic diagram showing a structure of a machine learning model according to an exemplary embodiment of the present disclosure. It should be noted that although the machine learning model shown in FIG. 11 includes both the semantic encoding branch and the quality degradation estimation branch, in embodiments the machine learning model may only include one of them. The semantic encoding branch may be used to explicitly encode the semantic layout information of the image, so as to guide the decoder of the processing branch to generate textures. The quality degradation estimation branch may be used to predict the quality degradation level of different areas in the input image, that is, the quality of the input image. Guided by the semantic layout information and the quality degradation level information, the redrawing branch may be used to process the target area to output a high-quality image (real and rich details, low noise, clarity, etc.).

FIG. 12 is a schematic diagram further showing a specific structure of the machine learning model according to an exemplary embodiment of the present disclosure.

According to an exemplary embodiment, in the case where the machine learning model includes the semantic encoding branch, the image processing method shown in FIG. 1 may further include: acquiring the semantic layout information of the target area. The semantic layout information may be used as one of the guide information to guide the processing of the target area. In other words, the target area may be processed based on the semantic layout information, so as to obtain a processed output image. Specifically, for example, as mentioned above, when the correlation between the rearranged different feature blocks is determined, the semantic layout information of the target area may be acquired, and the correlation between different feature blocks is determined based on the semantic layout information. The more similar the semantic layout information of the feature blocks, the higher the correlation between the feature blocks. By weighting and combining the feature blocks having similar semantic layout information, more reasonable textures may be produced.

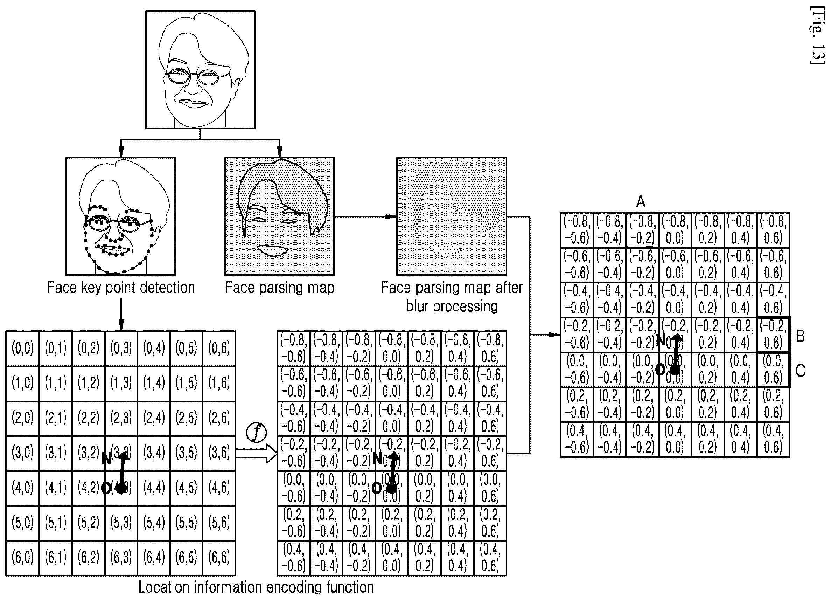

Hereinafter, the acquiring of the semantic layout information will be introduced with reference to FIG. 13 to FIG. 15. FIG. 13 is a schematic diagram of an operation of a semantic encoding branch according to an exemplary embodiment. The semantic encoding branch may contain two modules: a target area key point detecting module (when the target area is a face area, this may also be called a face key point detecting module) and a target area parsing module (when the target area is a face area, this may also be called a face parsing module), through the two modules, the semantic layout information of the target area (such as the face) may be explicitly extracted. The information will be fed to the redrawing branch to guide the processing of the target area. For example, such guide information may tell the network which is a hair area and which is a skin area, or which is the top of the hair and which is the end of the hair.

Specifically, the acquiring of the semantic layout information of the target area may include: obtaining absolute semantic layout information by parsing the target area; obtaining relative semantic layout information by detecting key points of the target area; and obtaining the semantic layout information by encoding the obtained absolute semantic layout information and relative semantic layout information. That is to say, the semantic layout information may include the absolute semantic layout information and the relative semantic layout information.

Specifically, as shown in FIG. 13, for example, when the target area is a face area, a face parsing map (called "a face parsing map" in FIG. 13) may be obtained by parsing the face area, and the absolute semantic layout information may be obtained by performing a blur processing on the face parsing map. In embodiments, the blur processing may be performed on the face parsing map, and the purpose thereof may be eliminating generation of artifacts when guiding the redrawing branch due to the inaccuracy of the parsing of a semantic boundary. Hereinafter, the absolute semantic layout information may also be called target area parsing information.

In addition, as shown in FIG. 13, the relative semantic layout information (hereinafter, the relative semantic layout information may also be called position encoding information) may be obtained through the following steps:

Step 1: detecting the key points of the target area. For example, a face key point detecting module in the semantic encoding branch may be used to detect the key points of the face area.

Step 2: selecting a first base point and a second base point from the detected key points. When the structure of the target area is relatively fixed, for example, when the target area is a face area, since the facial structure is relatively fixed, the facial parts have relative position invariance, and two base points are selected from the detected face key points: the tip of the nose is selected as the base point O, and the point on the bridge of the nose farthest from the point O is selected as the base point N.

Step 3: obtaining the relative semantic layout information by mapping a vector constituted by at least one point in the target area and the first base point to a reference vector constituted by the first base point and the second base point. Here, at least one point in the target area may be at least one pixel point in the target area. For a pixel point X on the image, its position encoding information is mapped through the function f(X), as shown in Equation 3 below:

$$f(X) = \frac{\omega \cdot \|r\|}{\|\overline{ON}\|} \cdot r \quad , \quad r = Project_{\overline{ON}} \overrightarrow{OX} \quad \text{(Equation 3)}$$

In Equation 3 above, $\omega$ is the normalization constant, and a typical value thereof is selected as 0.2; and $\overline{Y}$ is a projection of the vector $\overline{OX}$ on $\overline{ON}$.

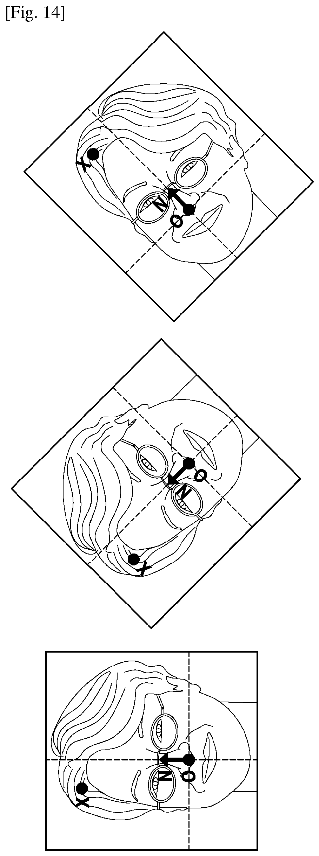

Because the relative invariance of the structure of the target area is used, the position encoding information has the characteristic of rotation invariance, that is, for any point in the target area, it will not change due to the rotation of the target area, as shown in FIG. 14.

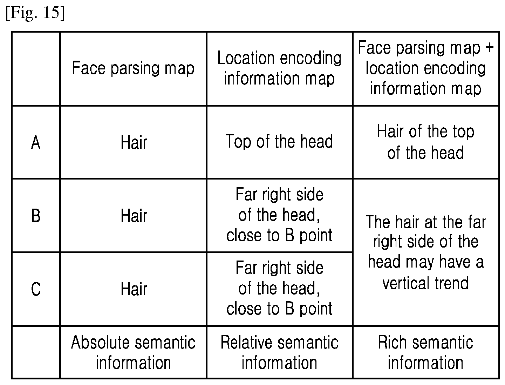

The target area parsing information reflects the absolute semantic layout information of the target area (e.g., where is a hair area and where is a skin area), while the position encoding information reflects the relative semantic layout information of the target area (e.g., whether it is the hair of the top hair or the hair of the end hair). Combining the two kinds of information may provide richer semantic guide information and make the texture generated by the model more reasonable. For example, for the three points A, B, and C in FIG. 13, when the two kinds of information are combined, the semantic becomes richer as shown in FIG. 15, which may be a benefit for guiding the model to generate more reasonable textures.

As described above, the acquired semantic layout information may be used to determine the correlation between the feature blocks when the feature blocks are weighted and combined. In addition, the semantic layout information may also be used when the output image after the target area is processed is obtained based on the weighted and combined feature blocks and the feature map.

For example, the obtaining of the output image after the target area is processed based on the weighted and combined feature blocks and the feature map mentioned when describing the image processing method of FIG. 1 may include: fusing semantic layout information of the target area to the feature map; obtaining a reconstruction feature map by recovering the weighted and combined feature blocks to an initial position thereof in the feature map; fusing the reconstruction feature map with the feature map fused with the semantic layout information; and obtaining the output image after the target area is processed based on the fused feature map. Here, fusing the semantic layout information into the feature map may be, for example, using a Spatially-Adaptive Normalization (SPADE) method to fuse the semantic layout information in different scale layers of the decoder of the processing branch, so as to enable the semantic information to supervise the restoration and generation of the texture. For example, each pixel point on the feature map is mapped to a new feature space by using the semantic layout information as shown in Equation 4 below:

$$k2 = k1 * (1 + \gamma) + \beta \quad , \quad \text{(Equation 4)}$$

In Equation 4 above, k1 and k2 are values of each pixel point on the feature map in the original feature space and the new feature space respectively, $\gamma$ and $\beta$ are a scaling factor and an offset factor respectively.

It may be seen that the function of the semantic layout information is reflected in two aspects. The first one is that it may guide the redrawing branch to generate more natural texture details. Because for any point on the image, the semantic layout information clarifies the semantic of the point, and then a texture that conforms to the semantics may be generated. For example, at a point in the hair area, the texture of the hair instead of the texture of the skin should be generated. Therefore, the semantic layout information may effectively overcome the defect of generating unreasonable textures due to the lack of explicit semantic information in the related art solutions. The second one is that it may help the feature reconstruction module in the redrawing branch to find more similar texture features. For example, the hair area on the top of the right head lacks textures, and the semantics of the hair on the top of the left head is closer than that of the end hair, thus, it will be more reasonable to use the hair feature of the top of the left head to supplement the hair feature of the top of the right head.

As shown in FIG. 12, the above machine learning model may include a quality degradation estimation branch. In embodiments, the image processing method shown in FIG. 1 may also include: acquiring the quality degradation level information based on quality degradation levels of different areas in the input image. Specifically, the above quality degradation estimation branch may be used to estimate quality degradation levels of different areas in the input image to acquire the quality degradation level information. The quality degradation level information may be used as one of the guide information to guide the processing of the target area. In other words, the target area may be processed based on the quality degradation level information, so as to obtain a processed output image. Specifically, the quality degradation level information may include the quality degradation level information of at least one feature block in the feature map. For example, as mentioned above, when the importance of at least one rearranged feature block is determined, the quality degradation level information of at least one feature block in the feature map may be acquired, and the importance of the at least one feature block is determined based on the quality degradation level information. The lower the quality degradation level of the feature block, the higher the importance of the feature block.

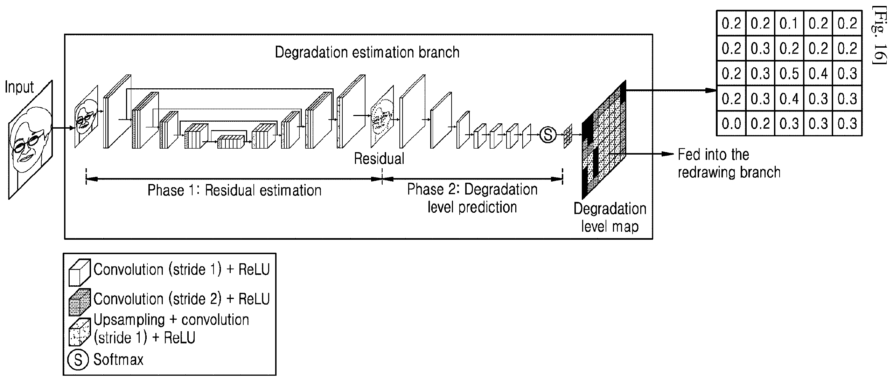

An example of the operation of the quality degradation branch will be briefly introduced below with reference to FIG. 16. The main function of the degradation estimation branch is to estimate the image quality degradation level in advance, that is, to predict the degree of the image quality. As shown in FIG. 16, this may include two phases. Phase 1 may be a residual prediction phase (which may also be called residual estimation phase) and Phase 2 may be a degradation level prediction phase. As an example, the residual prediction phase may use a UNet-like network structure to predict a difference between a small-scale input image and a clean image. The original intention of this design is: the residual contains main components of the image quality degradation. Therefore, to predict the degradation level, it is necessary to first extract the main components that cause the quality degradation. The residual prediction phase may be understood as a qualitative prediction of the image quality degradation level.

The degradation level prediction phase takes the output residual of the first stage as an input, and outputs a coarse-scale degradation level map (also called a "quality degradation level map"). Each pixel on the map corresponds to the image quality degradation level of a small area on the original image. The degradation level prediction phase may relate to a pixel-level classification network. The degradation level prediction phase may be understood as a quantitative prediction of the image quality degradation level. The degradation level is a reflection of the degree of the image quality degradation in the number. One feasible method is to discretize the degradation level into a certain number of levels, for example, ten levels (different levels correspond to different degradation levels), level 1 represents the lightest quality degradation (the image quality is very good), and level 10 represents the most serious quality degradation (the image quality is very bad), and these levels are quantified into a certain value section, for example, between 0 and 1, as shown for example in FIG. 16. As an example, the clean image and the degraded image may be correspondingly discretized into the same number of blocks, and the image quality measurement method (e.g., the peak signal-to-noise ratio PSNR) is used to measure a quality index between each pair of image blocks, and the quality index is used as the degradation level corresponding to this block.

In the present disclosure, the image quality degradation estimation branch works on a small-scale input image (an image obtained by reducing the original image to a certain scale). The purposes of this design may be: (1) it may cause a fast forward test speed; and (2) the degradation level has a regional characteristic, that is, reflecting the image quality of a certain area, thus, pixel-level prediction is unnecessary.

As a result, according to the exemplary embodiment, the above acquiring of the quality degradation level information based on quality degradation levels of different areas in the input image may include: reducing the input image to a predetermined size; predicting quality degradation levels of different areas of the input image reduced to the predetermined size; and quantizing the predicted quality degradation levels to acquire the quality degradation level information.

As shown in FIG. 12, the output of the degradation estimation branch will be fed into the redrawing branch to guide the generation of textures. Its guiding function may be reflected in two aspects: (1) it enables the entire network to have the ability of judging the image quality, thereby controlling the processing intensity, and overcoming the phenomenon of over-processing caused by the use of unified processing intensity; and (2) it helps to the feature reconstruction module in the branch to look for a better quality image feature as a supplement to the missing texture feature.

Therefore, by introducing a quality degradation estimation branch in the machine learning model, the condition of the image quality degradation is input to the processing branch as known information, so that the processing branch has the ability to perceive the image quality, so that it is possible to better control the processing intensity. That is to say, when the image quality is relatively good, a slight improvement is made, and when the image quality is relatively poor, a heavy processing is performed.

The image processing method according to various exemplary embodiments of the present disclosure have been described above in conjunction with FIG. 1 to FIG. 16, the image processing method of the present disclosure has a significant improvement in both the accuracy and the operating efficiency.

In addition, the output image obtained by using the image processing method according to the exemplary embodiment of the present disclosure has a better visual effect compared with the input image and compared with the output image obtained by using the related art solutions.

As mentioned above, there are the above Problem 2 and Problem 3 in the related art solutions, in the above description, with respect to the above Problem 2 and Problem 3, the present disclosure uses the semantic layout information and/or the quality degradation level information to guide the processing of the target area on the basis of the image processing method shown in FIG. 1, however, it should be noted that, according to another exemplary embodiment of the present disclosure, the semantic layout information may be not used to guide the processing of the target area on the basis of the image processing method shown in FIG. 1. In addition, according to a further exemplary embodiment of the present disclosure, the quality degradation level information may also be not used to guide the processing of the target area on the basis of the image processing method shown in FIG. 1.

That is to say, embodiments of the present disclosure may provide an image processing method that solves only the above Problem 1, an image processing method that solves the above Problem 1 and Problem 2 at the same time, an image processing method that solves the above Problem 1 and Problem 3 at the same time, and an image processing method that solves the above Problem 1, Problem 2, and Problem 3 at the same time, and may also provide an image processing method that solves only the above Problem 2, may also provide an image processing method that solves only the above Problem 3, and may also provide an image processing method that solves the above Problem 2 and Problem 3 at the same time.

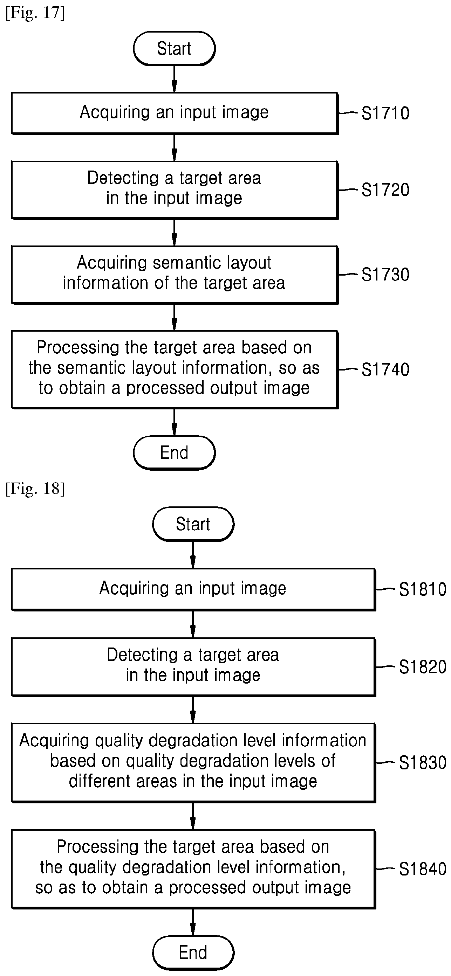

Hereinafter, examples of the two kinds of image processing methods will be described with reference to FIG. 17 and FIG. 18, according to embodiments.

FIG. 17 is a flowchart showing an image processing method according to another example embodiment of the present disclosure. Referring to FIG. 17, at step S1710, an input image is acquired. Next, at step S1720, a target area in the input image is detected. Step S1710 and step S1720 may be the same as the above described steps S110 and S120, and duplicative description may be omitted.

Subsequently, at step S1730, the semantic layout information of the target area is acquired. For example, at step S1730, the following operations may be performed to extract the semantic layout information: obtaining absolute semantic layout information by parsing the target area; obtaining relative semantic layout information by detecting key points of the target area; and obtaining the semantic layout information by encoding the obtained absolute semantic layout information and relative semantic layout information. For example, a face parsing map may be obtained by parsing the target area, and the absolute semantic layout information is obtained by performing a blur processing on the face parsing map. In addition, for example, the following operations may be performed to extract the relative semantic layout information: detecting the key points of the target area; selecting a first base point and a second base point from the detected key points; and obtaining the relative semantic layout information by mapping a vector constituted by at least one point in the target area and the first base point to a reference vector constituted by the first base point and the second base point. It should be noted that, hereinbefore, the acquiring of the semantic layout information has been described in detail, and the relevant contents may be referred to the above detailed descriptions, which will not be repeated here.

Finally, at step S1740, the target area is processed based on the semantic layout information, so as to obtain a processed output image. In the image processing method shown in FIG. 17, during the processing of the target area, the semantic layout information extracted at step S1730 is used as one of the guide information to guide the processing of the target area.

According to the image processing method shown in FIG. 17, by acquiring the semantic layout information of the target area, and processing the target area based on the semantic layout information, the texture generated during the processing of the target area may be made to be more reasonable.

FIG. 18 is a flowchart showing an image processing method according to a further example embodiment of the present disclosure. Referring to FIG. 18, at step S1810, an input image is acquired. Next, at step S1820, a target area in the input image is detected. Step S1810 and step S1820 are the same as the above described steps S110 and S120, and duplicative description may be omitted.

Subsequently, at step S1830, the quality degradation level information is acquired based on quality degradation levels of different areas in the input image. Specifically, for example, the following operations may be performed to acquire the quality degradation level information: reducing the input image to a predetermined size; predicting quality degradation levels of different areas of the input image reduced to the predetermined size; and quantizing the predicted quality degradation levels to acquire the quality degradation level information. In the above, how to obtain the quality degradation level information has been described, which will not be repeated here, and the relevant content may be referred to the above detailed description.

Finally, at step S1840, the target area is processed based on the quality degradation level information, so as to obtain a processed output image. The quality degradation level information is used as one of the guide information to guide the processing of the target area.

According to the image processing method shown in FIG. 18, by acquiring the quality degradation level information based on quality degradation levels of different areas in the input image, and processing the target area based on the quality degradation level information, the over-processing of the target area may be effectively prevented.

FIG. 17 and FIG. 18 respectively mention the processing of the target area based on the semantic layout information and the processing of the target area based on the quality degradation level information. In other words, the semantic layout information and the quality degradation level information are used as guide information to guide the processing of the target area. Regarding the guidance of the semantic layout information and the quality degradation level information on the processing of the target area, the corresponding descriptions in FIG. 13 to FIG. 16 may be referred to, and duplicative description may be omitted.

In addition, it should be noted that although the image processing method of FIG. 17 is described with respect to solving the above Problem 1 and the image processing method of FIG. 18 is described with respect to the above Problem 2, the embodiments shown in FIG. 17 and FIG. 18 may also be combined, that is, the present disclosure may provide an image processing method that solves both the above Problem 1 and Problem 2 at the same time. That is to say, the image processing method described in FIG. 17 may further include: acquiring the quality degradation level information based on quality degradation levels of different areas in the input image. In this case, the target area may be processed based on both the semantic layout information and the quality degradation level information, so as to obtain a processed output image. Moreover, the image processing method described in FIG. 18 may further include: acquiring the semantic layout information of the target area. In this case, the target area may be processed based on both the semantic layout information and the quality degradation level information, so as to obtain a processed output image.

That is to say, both the semantic layout information and the quality degradation level information may be used as the guide information to guide the processing of the target area. In summary, in addition to the image processing method shown in FIG. 1, the present disclosure may also provide an image processing method including the following operations: acquiring an input image; detecting a target area in the input image; acquiring semantic layout information of the target area, and/or acquiring quality degradation level information based on quality degradation levels of different areas in the input image; and processing the target area based on the semantic layout information and/or the quality degradation level information so as to obtain a processed output image.

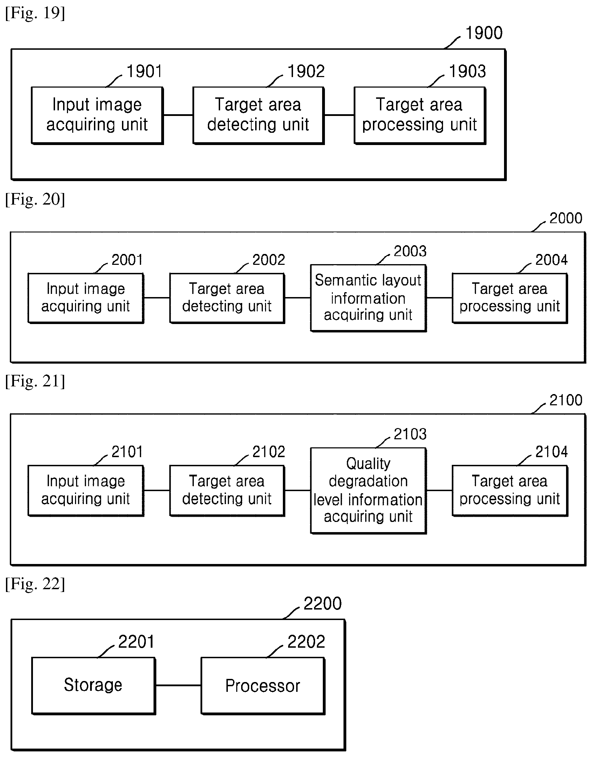

FIG. 19 is a block diagram showing an image processing device according to an exemplary embodiment of the present disclosure.

Referring to FIG. 19, an image processing device 1900 may include an input image acquiring unit 1901, a target area detecting unit 1902 and a target area processing unit 1903. Specifically, the input image acquiring unit 1901 may be configured for acquiring an input image. The target area detecting unit 1902 may be configured for detecting a target area in the input image. The target area processing unit 1903 may be configured for processing the target area. For example, the processing of the target area may include: obtaining a feature map of the target area, rearranging feature blocks in the feature map in a feature space, and obtaining an output image after the target area is processed based on the rearranged feature blocks and the feature map.

In embodiments, the image processing method shown in FIG. 1 may be executed by the image processing device 1900 shown in FIG. 19, and the input image acquiring unit 1901, the target area detecting unit 1902, and the target area processing unit 1903 may execute steps S110, S120, and S130, respectively. In embodiments, the elements of FIG. 19, may be understood to perform one or more of the functions or operations described above with respect to FIG. 1 to FIG. 10B, and duplicative description may be omitted.

In addition, it should be noted that although the image processing device 1900 is divided into units for performing corresponding processing respectively when being introduced above, it is clear to those skilled in the art that the processing performed by the above respective units may also be performed in the case where the image processing device 1900 does not perform any specific unit division or there is no explicit demarcation between the respective units. In addition, the image processing device 1900 may further include other units, for example, an image preprocessing unit, a storing unit and the like.

FIG. 20 is a block diagram showing an image processing device according to another exemplary embodiment of the present disclosure.

Referring to FIG. 20, an image processing device 2000 may include an input image acquiring unit 2001, a target area detecting unit 2002, a semantic layout information acquiring unit 2003 and a target area processing unit 2004. In embodiments, the mantic layout information acquiring unit 2003 may be referred to as an information acquiring unit. Specifically, the input image acquiring unit 2001 may be configured for acquiring an input image. The target area detecting unit 2002 may be configured for detecting a target area in the input image. The semantic layout information acquiring unit 2003 may be configured for acquiring the semantic layout information of the target area. The target area processing unit 2004 may be configured for processing the target area based on the semantic layout information, so as to obtain a processed output image.

In embodiments, the image processing method shown in FIG. 17 may be executed by the image processing device 2000 shown in FIG. 20, and the input image acquiring unit 2001, the target area detecting unit 2002, the semantic layout information acquiring unit 2003 and the target area processing unit 2004 may execute steps S1710, S1720, S1730 and S1740, respectively. In embodiments, the elements of FIG. 20 may be understood to perform one or more of the functions or operations described above with respect to FIG. 1 to 17, and duplicative description may be omitted..

FIG. 21 is a block diagram showing an image processing device according to another exemplary embodiment of the present disclosure.

Referring to FIG. 21, an image processing device 2100 may include an input image acquiring unit 2101, a target area detecting unit 2102, a quality degradation level information acquiring unit 2103 and a target area processing unit 2104. In embodiments, the a quality degradation level information acquiring unit 2103 may be referred to as an information acquiring unit. Specifically, the input image acquiring unit 2101 may be configured for acquiring an input image. The target area detecting unit 2102 may be configured for detecting a target area in the input image. The quality degradation level information acquiring unit 2103 is configured for acquiring the quality degradation level information based on quality degradation levels of different areas in the input image. The target area processing unit 2104 may be configured for processing the target area based on the quality degradation level information, so as to obtain a processed output image.

In embodiments, the image processing method shown in FIG. 18 may be executed by the image processing device 2100 shown in FIG. 21, and the input image acquiring unit 2101, the target area detecting unit 2102, the quality degradation level information acquiring unit 2103 and the target area processing unit 2104 execute steps S1810, S1820, S1830 and S1840, respectively. In embodiments, the elements of FIG. 21 may be understood to perform one or more of the functions or operations described above with respect to FIG. 1 to 18, and duplicative description may be omitted. , please refer to the above corresponding descriptions, which will not be repeated here.

In addition, as mentioned above, both the semantic layout information and the quality degradation level information may be acquired, and the target area is processed based on both the semantic layout information and the quality degradation level information, so as to obtain a processed output image. Correspondingly, in addition to the above image processing device, the present disclosure may also provide an image processing device including the following units: an input image acquiring unit configured for acquiring an input image; a target area detecting unit configured for detecting a target area in the input image; a semantic layout information and/or quality degradation level information acquiring unit configured for acquiring semantic layout information of the target area, and/or acquiring quality degradation level information based on quality degradation levels of different areas in the input image; and a target area processing unit configured for processing the target area based on the semantic layout information and/or the quality degradation level information so as to obtain a processed output image.

FIG. 22 is a block diagram of an electronic apparatus according to an exemplary embodiment of the present disclosure.

Referring to FIG. 22, an electronic apparatus 2200 may include at least one storage 2201 and at least one processor 2202. The at least one storage stores computer-executable instructions. The computer-executable instructions, when executed by the at least one processor, cause the at least one processor 2202 to execute the image processing method according to the embodiment of the present disclosure.

At least one of the above modules may be implemented through an artificial intelligence (AI) model. The functions associated with AI may be performed by a non-volatile memory, a volatile memory, and a processor.

The processor may include one or more processors. At this time, one or more processors may be general-purpose processors, such as central processing units (CPU), application processors (AP), etc., processors that are only used for graphics (such as graphics processing units (GPU), vision processors (VPU) and/or AI dedicated processors (e.g., neural processing units (NPU)).

One or more processors control the processing of input data according to a predefined operating rule or an AI model stored in the non-volatile memory and volatile memory. The predefined operating rule or the AI model may be provided through training or learning. Here, providing through learning means that by applying a learning algorithm to a plurality of learning data, to form a predefined operation rule or AI model with desired characteristics. The learning may be performed in the apparatus itself that performs AI according to the embodiment, and/or may be implemented by a separate server/apparatus/system.

The learning algorithm is a method that uses a plurality of learning data to train a predetermined target apparatus (e.g., a robot) to enable, allow, or control the target apparatus to make a determination or prediction. Examples of the learning algorithm include, but are not limited to, supervised learning, unsupervised learning, semi-supervised learning or reinforced learning.

According to embodiments, in the image processing method executed by the electronic apparatus, the output image after the target area is processed may be obtained by using the input image as the input data of the artificial intelligence model.

The artificial intelligence model may be obtained through training. Here, "obtained through training" refers to training a basic artificial intelligence model with a plurality of training data through a training algorithm, thereby obtaining a predefined operation rule or an artificial intelligence model, which is configured to perform the required feature (or purpose).

As an example, the artificial intelligence model may include a plurality of neural network layers. Each of the plurality of neural network layers includes a plurality of weight values, and the neural network calculation is performed through the calculation result of the previous layer and the calculation between the plurality of weight values. Examples of the neural network include, but are not limited to, a Convolutional Neural Network (CNN), a Deep Neural Network (DNN), a Recurrent Neural Network (RNN), a Restricted Boltzmann Machine (RBM), a Deep Belief Network (DBN), a Bidirectional Recursive Deep Neural Network (BRDNN), a Generative Adversarial Network (GAN) and Deep Q Network.

As an example, the electronic apparatus may be a PC computer, a tablet device, a personal digital assistant, a smart phone, or other devices capable of executing the above set of instructions. Here, the electronic apparatus does not have to be a single electronic apparatus and may also be any device or a collection of circuits that may execute the foregoing instructions (or instruction sets) individually or jointly. The electronic apparatus may also be a part of an integrated control system or a system manager, or may be configured as a portable electronic apparatus interconnected by an interface with a local or remote (e.g., via wireless transmission).

In the electronic apparatus, the processor may include a central processing unit (CPU), a graphics processing unit (GPU), a programmable logic device, a dedicated processor system, a microcontroller, or a microprocessor. As an example and not limitation, the processor may also include an analog processor, a digital processor, a microprocessor, a multi-core processor, a processor array, a network processor, and the like.

The processor may run instructions or codes stored in the memory, where the memory may also store data. Instructions and data may also be transmitted and received through a network via a network interface device, wherein the network interface device may use any known transmission protocol.

The memory may be integrated with the processor as a whole, for example, RAM or a flash memory is arranged in an integrated circuit microprocessor or the like. In addition, the memory may include an independent device, such as an external disk drive, a storage array, or any other storage device that may be used by a database system. The memory and the processor may be operatively coupled, or may communicate with each other, for example, through an I/O port, a network connection, or the like, so that the processor may read files stored in the memory.

In addition, the electronic apparatus may also include a video display (such as a liquid crystal display) and a user interaction interface (such as a keyboard, a mouse, a touch input device, etc.). All components of the electronic apparatus may be connected to each other via a bus and/or a network.

According to an embodiment of the present disclosure, there may also be provided a computer-readable storage medium storing instructions, wherein the instructions, when executed by at least one processor, cause the at least one processor to execute the image processing method according to the exemplary embodiment of the present disclosure. Examples of the computer-readable storage medium here include: Read Only Memory (ROM), Random Access Programmable Read Only Memory (PROM), Electrically Erasable Programmable Read Only Memory (EEPROM), Random Access Memory (RAM) , Dynamic Random Access Memory (DRAM), Static Random Access Memory (SRAM), flash memory, non-volatile memory, CD-ROM, CD-R, CD+R, CD-RW, CD+RW, DVD-ROM , DVD-R, DVD+R, DVD-RW, DVD+RW, DVD-RAM, BD-ROM, BD-R, BD-R LTH, BD-RE, Blu-ray or optical disc storage, Hard Disk Drive (HDD), Solid State Drive (SSD), card storage (such as multimedia card, secure digital (SD) card or extremely fast digital (XD) card), magnetic tape, floppy disk, magneto-optical data storage device, optical data storage device, hard disk, solid state disk and any other devices which are configured to store computer programs and any associated data, data files, and data structures in a non-transitory manner, and provide the computer programs and any associated data, data files, and data structures to the processor or the computer, so that the processor or the computer may execute the computer programs. The computer programs in the above computer-readable storage mediums may run in an environment deployed in computer equipment such as a client, a host, an agent device, a server, etc. In addition, in one example, the computer programs and any associated data, data files and data structures are distributed on networked computer systems, so that computer programs and any associated data, data files, and data structures are stored, accessed, and executed in a distributed manner through one or more processors or computers.

**Claims**

1. A computer- implemented image processing method, comprising:

   acquiring an input image (S110);
   detecting a target area in the input image (S120);
   obtaining a feature map of the target area by extracting image features of the target area,
   rearranging the feature blocks in the feature map in a feature space, wherein the feature map is discretized in feature blocks of the same size and arranged along a channel dimension according to a preset arrangement rule;
   determining at least one of a level of importance of the rearranged feature blocks and a correlation between different feature blocks; and
   weighting and combining the rearranged feature blocks, based on the at least one of the level of importance, of the rearranged feature blocks and the correlation between different feature blocks;
   obtaining the output image after the target area is processed based on the weighted and combined feature blocks and the obtained feature map,
   wherein the determining of the correlation between the different feature blocks comprises:

      acquiring semantic layout information of the target area and texture direction field information of the feature blocks of the feature map, wherein the texture direction field information comprises texture direction field consistency information; and
      determining the correlation between the different feature blocks, based on the at least one of the semantic layout information and the texture direction field information,

   wherein the acquiring of the semantic layout information comprises:

      obtaining absolute semantic layout information by parsing the target area;
      obtaining relative semantic layout information by detecting key points of the target area; and

obtaining the semantic layout information by encoding the obtained absolute semantic layout information and the relative semantic layout information,

wherein the obtaining of the absolute semantic layout information comprises:

obtaining a face parsing map by parsing the target area; and
obtaining the absolute semantic layout information by performing a blur processing on the face parsing map,

wherein the obtaining of the relative semantic layout information comprises:

detecting the key points of the target area;
selecting a first base point and a second base point from among the detected key points; and
obtaining the relative semantic layout information by mapping a vector including at least one point in the target area and the first base point, to a reference vector including the first base point and the second base point,

wherein the obtaining of the output image after the target area is processed based on the weighted and combined feature blocks and the feature map comprises:

fusing the semantic layout information of the target area to the feature map;
obtaining a reconstructed feature map by recovering the weighted and combined feature blocks to initial positions of the feature blocks thereof in the feature map;
fusing the reconstructed feature map with the feature map fused with the semantic layout information; and
obtaining the output image after the target area is processed based on the fused feature map.

2. The image processing method of claim 1, wherein the determining of the level of importance of the at least one rearranged feature block comprises:

acquiring at least one of quality degradation level information and texture direction field information of at least one feature block of the feature map; and
determining the level of importance of the at least one feature block, based on the at least one of the quality degradation level information and the texture direction field information,
wherein quality degradation level information is information on a degree of image quality of the input image.

3. The image processing method of claim 2, wherein the texture direction field information comprises texture direction field strength information.

4. The image processing method of claim 2, wherein the acquiring of the quality degradation level information comprises:

reducing the input image to a predetermined size;
predicting quality degradation levels of different areas of the input image reduced to the predetermined size; and
quantizing the predicted quality degradation levels to acquire the quality degradation level information

5. The image processing method of claim 1 or 2, wherein the acquiring of the texture direction field information comprises:

acquiring a gradient field corresponding to the at least one feature block of the feature map; and
obtaining the texture direction field information by applying expansion convolutions with different expansion rates to the gradient field.

6. An image processing device, comprising:

at least one storage (2201) configured to store one or more computer executable instructions, and
at least one processor (2202) configured to execute the one or more instructions stored in the storage to:

acquire an input image;
detect a target area in the input image;
obtain a feature map of the target area by extracting image features of the target area,
rearrange the feature blocks in the feature map in a feature space, wherein the feature map is discretized in feature blocks of the same size and arranged along a channel dimension according to a preset arrangement rule;

determining at least one of a level of importance of the rearranged feature blocks and a correlation between different feature blocks;

weighting and combining the rearranged feature blocks, based on the at least one of the level of importance, of the rearranged feature blocks and the correlation between different feature blocks;

obtaining the output image after the target area is processed based on the weighted and combined feature blocks and the obtained feature map,

wherein the determining of the correlation between the different feature blocks comprises:

acquire semantic layout information of the target area and texture direction field information of the feature blocks of the feature map, wherein the texture direction field information comprises texture direction field consistency information; and

determine the correlation between the different feature blocks, based on the at least one of the semantic layout information and the texture direction field information,

wherein the acquiring of the semantic layout information comprises:

obtain absolute semantic layout information by parsing the target area;

obtain relative semantic layout information by detecting key points of the target area; and

obtain the semantic layout information by encoding the obtained absolute semantic layout information and the relative semantic layout information,

wherein the obtaining of the absolute semantic layout information comprises:

obtain a face parsing map by parsing the target area; and

obtain the absolute semantic layout information by performing a blur processing on the face parsing map,

wherein the obtaining of the relative semantic layout information comprises:

detect the key points of the target area;

select a first base point and a second base point from among the detected key points; and

obtain the relative semantic layout information by mapping a vector including at least one point in the target area and the first base point, to a reference vector including the first base point and the second base point,

wherein the obtaining of the output image after the target area is processed based on the weighted and combined feature blocks and the feature map comprises:

fuse the semantic layout information of the target area to the feature map;

obtain a reconstructed feature map by recovering the weighted and combined feature blocks to initial positions of the feature blocks thereof in the feature map;

fuse the reconstructed feature map with the feature map fused with the semantic layout information; and

obtain the output image after the target area is processed based on the fused feature map.

7. A computer-readable storage medium configured to store instructions which when executed by at least one processor (2202), cause the at least one processor (2202) to execute the image processing method of any one of claims 1 to 5.

**Patentansprüche**

1. Computerumgesetztes Bildverarbeitungsverfahren, umfassend:

Erfassen eines Eingabebildes (S110);

Erkennen eines Zielbereichs im Eingabebild (S120);

Erhalten einer Merkmalskarte des Zielbereichs durch Extrahieren von Bildmerkmalen des Zielbereichs,

Umordnen der Merkmalsblöcke in der Merkmalskarte in einem Merkmalsraum, wobei die Merkmalskarte in Merkmalsblöcke der gleichen Größe diskretisiert und entlang einer Kanaldimension gemäß einer vorgegebenen Anordnungsregel angeordnet wird;

Bestimmen von mindestens einem von einem Wichtigkeitsgrad der neu angeordneten Merkmalsblöcke und einer Korrelation zwischen verschiedenen Merkmalsblöcken; und

Gewichten und Kombinieren der neu angeordneten Merkmalsblöcke basierend auf dem mindestens einen von dem Wichtigkeitsgrad der neu angeordneten Merkmalsblöcke und der Korrelation zwischen verschiedenen Merkmalsblöcken;

Erhalten des Ausgabebildes, nachdem der Zielbereich basierend auf den gewichteten und kombinierten Merkmalsblöcken und der erhaltenen Merkmalskarte verarbeitet wurde,

wobei die Bestimmung der Korrelation zwischen den verschiedenen Merkmalsblöcken umfasst:

Erfassen von semantischen Layoutinformationen des Zielbereichs und Texturrichtungsfeldinformationen der Merkmalsblöcke der Merkmalskarte, wobei die Texturrichtungsfeldinformationen Texturrichtungsfeldkonsistenzinformationen umfassen; und

Bestimmen der Korrelation zwischen den verschiedenen Merkmalsblöcken, basierend auf dem mindestens einen der semantischen Layoutinformation und der Texturrichtungsfeldinformation,

wobei das Erfassen der semantischen Layoutinformationen umfasst:

Erhalten absoluter semantischer Layoutinformationen durch Parsing des Zielbereichs;

Erhalten relativer semantischer Layoutinformationen durch Erfassen von Schlüsselpunkten des Zielbereichs; und

Erhalten der semantischen Layoutinformationen durch Codierung der erhaltenen absoluten semantischen Layoutinformationen und der relativen semantischen Layoutinformationen,

wobei das Erhalten der absoluten semantischen Layoutinformationen umfasst:

Erhalten einer Gesichts-Parsing-Karte durch Parsing des Zielbereichs; und

Erhalten der absoluten semantischen Layoutinformationen durch Durchführung einer Unschärfeverarbeitung auf der Gesichts-Parsing-Karte,

wobei das Erhalten der relativen semantischen Layoutinformationen umfasst:

Erkennen der Schlüsselpunkte des Zielbereichs;

Auswählen eines ersten Basispunktes und eines zweiten Basispunktes aus den erfassten Schlüsselpunkten; und

Erhalten der relativen semantischen Layoutinformation durch Abbilden eines Vektors, der mindestens einen Punkt im Zielbereich und den ersten Basispunkt beinhaltet, auf einen Referenzvektor, der den ersten Basispunkt und den zweiten Basispunkt beinhaltet,

wobei das Erhalten des Ausgabebildes, nachdem der Zielbereich basierend auf den gewichteten und kombinierten Merkmalsblöcken und der Merkmalskarte verarbeitet wurde, Folgendes umfasst:

Verschmelzen der semantischen Layoutinformationen des Zielbereichs mit der Merkmalskarte;

Erhalten einer rekonstruierten Merkmalskarte durch Wiederherstellen der gewichteten und kombinierten Merkmalsblöcke an den Anfangspositionen der Merkmalsblöcke in der Merkmalskarte;

Verschmelzen der rekonstruierten Merkmalskarte mit der mit den semantischen Layoutinformationen verschmolzenen Merkmalskarte; und

Erhalten des Ausgabebildes, nachdem der Zielbereich basierend auf der verschmolzenen Merkmalskarte verarbeitet wurde.

2. Bildverarbeitungsverfahren nach Anspruch 1, wobei das Bestimmen des Wichtigkeitsgrades des mindestens einen neu angeordneten Merkmalsblocks umfasst:

Erfassen von mindestens einem von Qualitätsverschlechterungsgradinformationen und Texturrichtungsfeldinformation von mindestens einem Merkmalsblock der Merkmalskarte; und

Bestimmen des Wichtigkeitsgrads des mindestens einen Merkmalsblocks basierend auf der mindestens einen der Qualitätsverschlechterungsgradinformation und der Texturrichtungsfeldinformation,

wobei die Qualitätsverschlechterungsgradinformation eine Information über den Grad der Bildqualität des Eingabebildes ist.

3. Bildverarbeitungsverfahren nach Anspruch 2, wobei die Texturrichtungsfeldinformation eine Texturrichtungsfeldstärkeinformation umfasst.

4. Bildverarbeitungsverfahren nach Anspruch 2, wobei das Erfassen der Qualitätsverlustgradinformation Folgendes umfasst:

Verkleinern des Eingabebildes auf eine vorgegebene Größe;
Vorhersagen von Qualitätsverschlechterungsgraden verschiedener Bereiche des auf die vorbestimmte Größe reduzierten Eingabebildes; und
Quantisieren der vorhergesagten Qualitätsverschlechterungsgraden, um Qualitätsverschlechterungsgradinformationen zu erhalten.

5. Bildverarbeitungsverfahren nach Anspruch 1 oder 2, wobei das Erfassen der Texturrichtungsfeldinformation Folgendes umfasst:

Erfassen eines Gradientenfeldes, das dem mindestens einen Merkmalsblock der Merkmalskarte entspricht; und
Erhalten der Texturrichtungsfeldinformation durch Anwendung von Expansionsfaltungen mit unterschiedlichen Expansionsraten auf das Gradientenfeld.

6. Bildverarbeitungsvorrichtung, umfassend:

mindestens einen Speicher (2201), der so konfiguriert ist, dass er eine oder mehrere computerausführbare Anweisungen speichert, und
mindestens einen Prozessor (2202), der konfiguriert ist, um die eine oder die mehreren Anweisungen auszuführen, die im Speicher gespeichert sind zum:

Erfassen eines Eingabebildes;
Erkennen eines Zielbereichs im Eingabebild;
Erhalten einer Merkmalskarte des Zielbereichs durch Extrahieren von Bildmerkmalen des Zielbereichs,
Umordnen der Merkmalsblöcke in der Merkmalskarte in einem Merkmalsraum, wobei die Merkmalskarte in Merkmalsblöcke der gleichen Größe diskretisiert und entlang einer Kanaldimension gemäß einer vorgegebenen Anordnungsregel angeordnet wird;
Bestimmen von mindestens einem von einem Wichtigkeitsgrad der neu angeordneten Merkmalsblöcke und einer Korrelation zwischen verschiedenen Merkmalsblöcken;
Gewichten und Kombinieren der neu angeordneten Merkmalsblöcke basierend auf dem mindestens einen von dem Wichtigkeitsgrad der neu angeordneten Merkmalsblöcke und der Korrelation zwischen verschiedenen Merkmalsblöcken;
Erhalten des Ausgabebildes, nachdem der Zielbereich basierend auf den gewichteten und kombinierten Merkmalsblöcken und der erhaltenen Merkmalskarte verarbeitet wurde,
wobei die Bestimmung der Korrelation zwischen den verschiedenen Merkmalsblöcken umfasst:

Erfassen von semantischen Layoutinformationen des Zielbereichs und Texturrichtungsfeldinformationen der Merkmalsblöcke der Merkmalskarte, wobei die Texturrichtungsfeldinformationen Texturrichtungsfeldkonsistenzinformationen umfassen; und
Bestimmen der Korrelation zwischen den verschiedenen Merkmalsblöcken, basierend auf dem mindestens einen der semantischen Layoutinformation und der Texturrichtungsfeldinformation,
wobei das Erfassen der semantischen Layoutinformationen umfasst:

Erhalten absoluter semantischer Layoutinformationen durch Parsing des Zielbereichs;
Erhalten relativer semantischer Layoutinformationen durch Erfassen von Schlüsselpunkten des Zielbereichs; und
Erhalten der semantischen Layoutinformationen durch Codierung der erhaltenen absoluten semantischen Layoutinformationen und der relativen semantischen Layoutinformationen,
wobei das Erhalten der absoluten semantischen Layoutinformationen umfasst:

Erhalten einer Gesichts-Parsing-Karte durch Parsing des Zielbereichs; und
Erhalten der absoluten semantischen Layoutinformationen durch Durchführung einer Unschärfeverarbeitung auf der Gesichts-Parsing-Karte,

wobei das Erhalten der relativen semantischen Layoutinformationen umfasst:

Erkennen der Schlüsselpunkte des Zielbereichs;

Auswählen eines ersten Basispunktes und eines zweiten Basispunktes aus den erfassten Schlüsselpunkten; und

Erhalten der relativen semantischen Layoutinformation durch Abbilden eines Vektors, der mindestens einen Punkt im Zielbereich und den ersten Basispunkt beinhaltet, auf einen Referenzvektor, der den ersten Basispunkt und den zweiten Basispunkt beinhaltet,

wobei das Erhalten des Ausgabebildes, nachdem der Zielbereich basierend auf den gewichteten und kombinierten Merkmalsblöcken und der Merkmalskarte verarbeitet wurde, Folgendes umfasst:

Verschmelzen der semantischen Layoutinformationen des Zielbereichs mit der Merkmalskarte;

Erhalten einer rekonstruierten Merkmalskarte durch Wiederherstellen der gewichteten und kombinierten Merkmalsblöcke an den Anfangspositionen der Merkmalsblöcke in der Merkmalskarte;

Verschmelzen der rekonstruierten Merkmalskarte mit der mit den semantischen Layoutinformationen verschmolzenen Merkmalskarte; und

Erhalten des Ausgabebildes, nachdem der Zielbereich basierend auf der verschmolzenen Merkmalskarte verarbeitet wurde.

7. Computerlesbares Speichermedium, das konfiguriert ist, Anweisungen zu speichern, die, wenn sie von mindestens einem Prozessor (2202) ausgeführt werden, bewirken, dass der mindestens eine Prozessor (2202) das Bildverarbeitungsverfahren gemäß einem der Ansprüche 1 bis 5 ausführt.

## Revendications

1. Procédé de traitement d'images mis en œuvre par ordinateur, comprenant :

acquérir une image d'entrée (S110) ;

détecter une zone cible dans l'image d'entrée (S120) ;

obtenir une carte de caractéristiques de la zone cible en extrayant les caractéristiques d'image de la zone cible,

réorganiser les blocs de caractéristiques dans la carte de caractéristiques dans un espace de caractéristiques, la carte de caractéristiques étant discrétisée en blocs de caractéristiques de même taille et disposés le long d'une dimension de canal selon une règle d'arrangement prédéfinie ;

déterminer au moins un d'un niveau d'importance des blocs de caractéristiques réarrangés et d'une corrélation entre les différents blocs de caractéristiques ; et

pondérer et combiner les blocs de caractéristiques réarrangés, sur la base de l'au moins un du niveau d'importance des blocs de caractéristiques réarrangés et de la corrélation entre les différents blocs de caractéristiques ;

obtenir l'image de sortie après le traitement de la zone cible en se basant sur les blocs de caractéristiques pondérés et combinés et sur la carte de caractéristiques obtenue,

dans lequel la détermination de la corrélation entre les différents blocs de caractéristiques comprend :

acquérir des informations de disposition sémantique de la zone cible et des informations de champ de direction de texture des blocs de caractéristiques de la carte de caractéristiques, les informations de champ de direction de texture comprenant des informations de cohérence de champ de direction de texture ; et

déterminer la corrélation entre les différents blocs de caractéristiques, en se basant sur l'au moins une des informations de disposition sémantique et des informations de champ de direction de texture,

dans lequel l'acquisition des informations de disposition sémantique comprend :

obtenir des informations de disposition sémantique absolue en analysant la zone cible ;

obtenir des informations de disposition sémantique relative en détectant les points clés de la zone cible ; et

obtenir les informations de disposition sémantique en codant les informations de disposition sémantique absolue obtenues et les informations de disposition sémantique relative,

dans lequel l'obtention des informations de disposition sémantique absolue comprend :

obtenir une carte d'analyse de visage en analysant la zone cible ; et
obtenir les informations de disposition sémantique absolue en effectuant un traitement de flou sur la carte d'analyse de visage,

dans lequel l'obtention des informations de disposition sémantique relative comprend :

détecter les points clés de la zone cible ;
sélectionner un premier point de base et un second point de base parmi les points clés détectés ; et
obtenir les informations de disposition sémantique relative en mappant un vecteur comprenant au moins un point dans la zone cible et le premier point de base, à un vecteur de référence comprenant le premier point de base et le second point de base,

dans lequel l'obtention de l'image de sortie après le traitement de la zone cible en se basant sur les blocs de caractéristiques pondérés et combinés et la carte de caractéristiques comprend :

fusionner les informations de disposition sémantique de la zone cible avec la carte de caractéristiques ;
obtenir une carte de caractéristiques reconstruite en récupérant les blocs de caractéristiques pondérés et combinés aux positions initiales des blocs de caractéristiques dans la carte de caractéristiques ;
fusionner la carte de caractéristiques reconstruite avec la carte de caractéristiques fusionnée avec les informations de disposition sémantique ; et
obtenir l'image de sortie après le traitement de la zone cible en se basant sur la carte de caractéristiques fusionnée.

2. Procédé de traitement d'images de la revendication 1, dans lequel la détermination du niveau d'importance de l'au moins un bloc de caractéristiques réarrangé comprend :

acquérir au moins une des informations de niveau de dégradation de qualité et des informations de champ de direction de texture d'au moins un bloc de caractéristiques de la carte de caractéristiques ; et
déterminer le niveau d'importance de l'au moins un bloc de caractéristiques, en se basant sur l'au moins une des informations de niveau de dégradation de qualité et des informations de champ de direction de texture,
dans lequel les informations de niveau de dégradation de qualité sont des informations sur un degré de qualité d'image de l'image d'entrée.

3. Procédé de traitement d'images de la revendication 2, dans lequel les informations de champ de direction de texture comprennent des informations d'intensité de champ de direction de texture.

4. Procédé de traitement d'images de la revendication 2, dans lequel l'acquisition des informations de niveau de dégradation de qualité comprend :

réduire l'image d'entrée à une taille prédéterminée ;
prédire les niveaux de dégradation de qualité des différentes zones de l'image d'entrée réduite à la taille prédéterminée ; et
quantifier les niveaux de dégradation de qualité prédits afin d'obtenir des informations de niveau de dégradation de qualité.

5. Procédé de traitement d'images de la revendication 1 ou 2, dans lequel l'acquisition des informations de champ de direction de texture comprend :

acquérir un champ de gradient correspondant à l'au moins un bloc de caractéristiques de la carte de caractéristiques ; et
obtenir des informations de champ de direction de texture en appliquant au champ de gradient des convolutions d'expansion avec différents taux d'expansion.

6. Dispositif de traitement d'images, comprenant :

au moins une mémoire (2201) configurée pour stocker une ou plusieurs instructions exécutables par ordinateur, et

au moins un processeur (2202) configuré pour exécuter l'une ou les plusieurs instructions stockées dans la mémoire pour :

acquérir une image d'entrée ;

détecter une zone cible dans l'image d'entrée ;

obtenir une carte de caractéristiques de la zone cible en extrayant les caractéristiques d'image de la zone cible,

réorganiser les blocs de caractéristiques dans la carte de caractéristiques dans un espace de caractéristiques, la carte de caractéristiques étant discrétisée en blocs de caractéristiques de même taille et disposés le long d'une dimension de canal selon une règle d'arrangement prédéfinie ;

déterminer au moins un d'un niveau d'importance des blocs de caractéristiques réarrangés et d'une corrélation entre les différents blocs de caractéristiques ;

pondérer et combiner les blocs de caractéristiques réarrangés, sur la base de l'au moins un du niveau d'importance des blocs de caractéristiques réarrangés et de la corrélation entre les différents blocs de caractéristiques ;

obtenir l'image de sortie après le traitement de la zone cible en se basant sur les blocs de caractéristiques pondérés et combinés et sur la carte de caractéristiques obtenue,

dans lequel la détermination de la corrélation entre les différents blocs de caractéristiques comprend :

acquérir des informations de disposition sémantique de la zone cible et des informations de champ de direction de texture des blocs de caractéristiques de la carte de caractéristiques, les informations de champ de direction de texture comprenant des informations de cohérence de champ de direction de texture ; et

déterminer la corrélation entre les différents blocs de caractéristiques, en se basant sur l'au moins une des informations de disposition sémantique et des informations de champ de direction de texture,

dans lequel l'acquisition des informations de disposition sémantique comprend :

obtenir des informations de disposition sémantique absolue en analysant la zone cible ;

obtenir des informations de disposition sémantique relative en détectant les points clés de la zone cible ; et

obtenir les informations de disposition sémantique en codant les informations de disposition sémantique absolue obtenues et les informations de disposition sémantique relative,

dans lequel l'obtention des informations de disposition sémantique absolue comprend :

obtenir une carte d'analyse de visage en analysant la zone cible ; et

obtenir les informations de disposition sémantique absolue en effectuant un traitement de flou sur la carte d'analyse de visage,

dans lequel l'obtention des informations de disposition sémantique relative comprend :

détecter les points clés de la zone cible ;

sélectionner un premier point de base et un second point de base parmi les points clés détectés ; et

obtenir les informations de disposition sémantique relative en mappant un vecteur comprenant au moins un point dans la zone cible et le premier point de base, à un vecteur de référence comprenant le premier point de base et le second point de base,

dans lequel l'obtention de l'image de sortie après le traitement de la zone cible en se basant sur les blocs de caractéristiques pondérés et combinés et la carte de caractéristiques comprend :

fusionner les informations de disposition sémantique de la zone cible avec la carte de caractéristiques ;

obtenir une carte de caractéristiques reconstruite en récupérant les blocs de caractéristiques pondérés et combinés aux positions initiales des blocs de caractéristiques dans la carte de caractéristiques ;

fusionner la carte de caractéristiques reconstruite avec la carte de caractéristiques fusionnée avec les informations de disposition sémantique ; et

obtenir l'image de sortie après le traitement de la zone cible en se basant sur la carte de caractéristiques fusionnée.

7. Support de stockage lisible par ordinateur, configuré pour stocker des instructions qui, lorsqu'elles sont exécutées par au moins un processeur (2202), amènent l'au moins un processeur (2202) à mettre en œuvre le procédé de traitement d'images selon l'une quelconque des revendications 1 à 5.

[Fig. 1]

```
                  ┌──────────┐
                  │  Start   │
                  └────┬─────┘
                       │
                       ▼
        ┌─────────────────────────────┐
        │  Acquiring an input image   │── S110
        └──────────────┬──────────────┘
                       │
                       ▼
        ┌─────────────────────────────┐
        │   Detecting a target area   │── S120
        │      in the input image     │
        └──────────────┬──────────────┘
                       │
                       ▼
        ┌─────────────────────────────┐
        │   Processing the target area│── S130
        └──────────────┬──────────────┘
                       │
                       ▼
                  ┌──────────┐
                  │   End    │
                  └──────────┘
```

[Fig. 2]

[Fig. 3]

302

For three stacked 3 X 3 ordinary convolutions, the receptive field is very limited (the gray range in the figure)

304

In the case of block arrangement of 4 X 4 the three stacked 3 X 3 ordinary convolutions may feel the entire feature map

[Fig. 4]

[Fig. 5]

[Fig. 6]

Feature reconstruction

Input feature → Texture trend extraction → Feature compression → Learning-based spatial reconstruction → Feature decompression → Input feature

[Fig. 7]

702

[Fig. 8]

802

Guide

Texture generation

Image before the texture is generated

Image after the texture is generated

[Fig. 9]

**Texture trend extraction**

Feature direction field

Expansion convolutions with different expansion rates

Convolution

Gradient calculation in X direction

Gradient calculation in Y direction

Ⓒ Connection

[Fig. 10A]

Convolution

Convolution

For textures with a consistent direction field, the direction field will be enhanced after convolution

For textures with inconsistent direction fields, the direction field is changed very little after convolution

[Fig. 10B]

Convolution

For textures with the consistent direction field, the direction field will cause the direction field to be further propagated

[Fig. 11]

Input

Quality degradation estimation branch → Guide

Semantic encoding branch → Guide

Redrawing branch

Output

[Fig. 12]

[Fig. 13]

Face key point detection

Face parsing map

Face parsing map after blur processing

Location information encoding function

[Fig. 14]

[Fig. 15]

| | Face parsing map | Location encoding information map | Face parsing map + location encoding information map |
|---|---|---|---|
| A | Hair | Top of the head | Hair of the top of the head |
| B | Hair | Far right side of the head, close to B point | The hair at the far right side of the head may have a vertical trend |
| C | Hair | Far right side of the head, close to B point | |
| | Absolute semantic information | Relative semantic information | Rich semantic information |

[Fig. 16]

[Fig. 17]

```
                    ( Start )
                       │
                       ▼
        ┌──────────────────────────────┐
        │   Acquiring an input image    │── S1710
        └──────────────────────────────┘
                       │
                       ▼
        ┌──────────────────────────────┐
        │     Detecting a target area   │── S1720
        │        in the input image     │
        └──────────────────────────────┘
                       │
                       ▼
        ┌──────────────────────────────┐
        │     Acquiring semantic layout │── S1730
        │   information of the target area │
        └──────────────────────────────┘
                       │
                       ▼
        ┌──────────────────────────────┐
        │ Processing the target area based on │
        │ the semantic layout information, so as │── S1740
        │   to obtain a processed output image │
        └──────────────────────────────┘
                       │
                       ▼
                    ( End )
```

[Fig. 18]

```
                    ( Start )
                       │
                       ▼
        ┌──────────────────────────────┐
        │   Acquiring an input image    │── S1810
        └──────────────────────────────┘
                       │
                       ▼
        ┌──────────────────────────────┐
        │     Detecting a target area   │── S1820
        │        in the input image     │
        └──────────────────────────────┘
                       │
                       ▼
        ┌──────────────────────────────────────┐
        │ Acquiring quality degradation level information │
        │   based on quality degradation levels of │── S1830
        │      different areas in the input image  │
        └──────────────────────────────────────┘
                       │
                       ▼
        ┌──────────────────────────────────────┐
        │   Processing the target area based on │
        │ the quality degradation level information, │── S1840
        │   so as to obtain a processed output image │
        └──────────────────────────────────────┘
                       │
                       ▼
                    ( End )
```

[Fig. 19]

1900

| 1901 | 1902 | 1903 |
|---|---|---|
| Input image acquiring unit | Target area detecting unit | Target area processing unit |

[Fig. 20]

2000

| 2001 | 2002 | 2003 | 2004 |
|---|---|---|---|
| Input image acquiring unit | Target area detecting unit | Semantic layout information acquiring unit | Target area processing unit |

[Fig. 21]

2100

| 2101 | 2102 | 2103 | 2104 |
|---|---|---|---|
| Input image acquiring unit | Target area detecting unit | Quality degradation level information acquiring unit | Target area processing unit |

[Fig. 22]

2200

| 2201 | 2202 |
|---|---|
| Storage | Processor |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112990053 A

**Non-patent literature cited in the description**

- Block-Attentive Subpixel Prediction Networks for Computationally Efficient Image Restoration. **KIM TAEOH et al.** IEEE ACCESS. IEEE, 24 June 2021, vol. 9, 90881-90895

- Underwater Image Co-Enhancement With Correlation Feature Matching and Joint Learning. **01 01 et al.** IEEE TRANSACTIONS ON CIRCUITS AND SYSTEMS FOR VIDEO TECHNOLOGY. IEEE, 20 April 2021, vol. 32, 1133-1147